(19) Europäisches Patentamt
European Patent Office
Office européen des brevets

(11) **EP 3 156 782 B1**

(12) **EUROPÄISCHE PATENTSCHRIFT**

(45) Veröffentlichungstag und Bekanntmachung des Hinweises auf die Patenterteilung:
**19.10.2022 Patentblatt 2022/42**

(21) Anmeldenummer: **16184704.1**

(22) Anmeldetag: **18.08.2016**

(51) Internationale Patentklassifikation (IPC):
**G01N 21/31** (2006.01)     **G01N 21/74** (2006.01)
**G01N 21/64** (2006.01)     **G06T 7/00** (2017.01)

(52) Gemeinsame Patentklassifikation (CPC):
**G01N 21/3103; G01N 21/6404; G01N 21/74; G06T 7/001**

(54) **VERFAHREN ZUR SPEKTRALEN ANALYSE VON IN EINEM GRAPHITROHR ATOMISIERTEN PROBEN**

METHOD FOR SPECTRAL ANALYSIS OF SAMPLES ATOMIZED IN A GRAPHITE TUBE

PROCÉDÉ D'ANALYSE SPECTRALE D'ÉCHANTILLONS ATOMISÉS DANS UN TUBE DE GRAPHITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2015 DE 102015117384**

(43) Veröffentlichungstag der Anmeldung:
**19.04.2017 Patentblatt 2017/16**

(73) Patentinhaber: **Analytik Jena GmbH**
**07745 Jena (DE)**

(72) Erfinder:
• **von Chamier-Glisczinski, Robert**
**07743 Jena (DE)**
• **Thamm, Eike**
**07646 Stadtroda (DE)**

(74) Vertreter: **Koslowski, Christine Adelheid**
**Endress+Hauser Group Services**
**(Deutschland) AG+Co. KG**
**Colmarer Straße 6**
**79576 Weil am Rhein (DE)**

(56) Entgegenhaltungen:
**GB-A- 2 286 243     US-A1- 2008 088 836**

• **BOULO P R ET AL: "Use of Image Processing to Aid Furnace Set-up in Electrothermal Atomic Absorption Spectrometry", Journal of Analytical Atomic Spectrometry, Bd. 12 März 1997 (1997-03), Seiten 293-300, XP55326653, Gefunden im Internet:**
**URL:http://pubs.rsc.org/en/content/article pdf/1997/ja/a606255e [gefunden am 2016-12-06]**

**Beschreibung**

**Technisches Gebiet**

Die Erfindung betrifft ein Verfahren zur spektralen Analyse von Proben in einem Graphitrohr, auch als elektrothermischer Atomisierer bezeichnet, das unter anderem die folgenden Schritte aufweist:

(a) Einbringen einer flüssigen Probe in ein Graphitrohr;
(b) Trocknen der Probe durch Erhitzen des Graphitrohrs;
(c) Überführen der Probe in eine Teilchenwolke durch weiteres Erhitzen des Graphitrohrs; und
(d) Messen eines von der Probe beeinflussten oder erzeugten optischen Signals mit einem Detektor;

wobei
(e) Bildfolgen des Innenraums des Graphitrohrs über ausgewählte Zeiträume während der spektralen Analyse mit einer zweidimensionalen Kamera mit einer Vielzahl von Bildelementen aufgenommen werden.

Mit einem solchen Verfahren werden beispielsweise Atomabsorptionsspektrometer betrieben, mit denen die Menge eines Elements in einer Probe sehr genau bestimmt werden kann.

Die üblicherweise flüssige Probe wird bei dem Verfahren in ein Graphitrohr dosiert. Hierzu wird eine Pipette oder ein Probengeber verwendet. Das Graphitrohr wird entsprechend einem Temperaturprogramm schrittweise auf verschiedene Temperaturen geheizt. Dabei wird zunächst auf eine vergleichsweise geringe Temperatur geheizt, bei der die Probe getrocknet wird und das analytisch uninteressante Lösungsmittel verdampft. Anschließend wird das Graphitrohr mit der getrockneten Probe auf eine hohe Temperatur oberhalb von typischerweise 1400°C gebracht. Die Probe verdampft zu einer Teilchenwolke. Moleküle werden bei der Pyrolyse durch diese hohen Temperaturen zu Atomen gespalten. Die Teilchenwolke wird optisch hinsichtlich ihrer spektralen Eigenschaften, beispielsweise durch Fluoreszenz-, Absorptions- oder Emissionsmessungen untersucht.

Besonders gute analytische Resultate werden mit einer L'vovschen Plattform im rohrförmigen Graphitrohr nach dem STPF-Konzept erreicht.

Das gewählte Temperaturprogramm, mit dem das Graphitrohr geheizt wird, hat großen Einfluss auf wichtige analytische Eigenschaften der Messung, insbesondere auf Richtigkeit, Empfindlichkeit und Nachweisgrenze. Für gute Ergebnisse muss sichergestellt sein, dass die Probe vollständig getrocknet ist, aber die zu untersuchenden Bestandteile noch nicht verdampfen. Die Probe darf nicht verspritzen oder zu früh aus dem Dosierloch des Graphitrohrs entweichen. Unterschiedliche Proben erfordern daher ein unterschiedliches Temperaturprogramm.

Neben dem Temperaturprogramm ist auch die Dosiergenauigkeit des Probengebers oder der Pipette wichtig. Je nachdem, ob Proben an unterschiedlichen Stellen im Graphitrohr abgelegt werden, können die Messergebnisse variieren. Zur Erzielung einer hohen Richtigkeit und Reproduzierbarkeit wird daher die Probenplatzierung kontrolliert.

Unter Methodenentwicklung wird die Entwicklung u.a. von Temperaturprogrammen und Zusätzen für verschiedene Proben verstanden.

**Stand der Technik**

DE 3876018 T2 beschreibt Aufbau und Wirkungsweise eines typischen Graphitrohrs in einem Atomabsorptionsspektrometer, bei dem die Dauer des Temperaturprogramms dadurch verkürzt werden soll, dass die Probe aus einem Rohr in das vorgewärmte Graphitrohr eingesprüht wird.

Auf der Webseite http://www.analytik-jena.de/de/analyticalinstrumentation/produkte/atomabsorptionsspektrometer/hr-cs-aas/contraar-600.html wird unter der Bezeichnung contrAA® 600 ein Atomabsorptionsspektrometer angeboten, das eine integrierbare Kamera zur Beobachtung der Tropfenablage und Trocknung im Graphitrohr verwendet. Dabei ist offenbart, dass dank der integrierten Farbkamera alle Prozesse im Graphitrohr im Detail beobachtet werden können, von der Tropfenablage bis hin zur Trocknung und Pyrolyse. Dadurch sei die einfache und korrekte Methodenentwicklung möglich.

Ein beispielhaftes Temperaturprogramm ist auf www.wikipedia.de beschrieben:

1. *Trocknung 1*: für etwa 30 s wird das Graphitrohr auf 90 °C bis 130 °C geheizt um die Probe einzuengen und nahezu zu trocknen.
2. *Trocknung 2*: für etwa 20 s wird das Graphitrohr auf 400 °C geheizt um die Probe vollständig zu trocknen (wenn Kristallwasser vorhanden)
3. *Pyrolyse:* für etwa 30 s wird das Graphitrohr auf 400 °C bis 1500 °C (abhängig vom Element) geheizt um die organische Bestandteile zu entfernen. Dies geschieht durch Pyrolyse oder Veraschung
4. *Atomisierung:* bei 1500 °C bis 2500 °C (abhängig von der elementspezifischen Atomisierungstemperatur) wird die Probe etwa 5 s atomisiert

5. *Ausheizen:* schließlich wird nach Ende der Analyse noch etwa 3 s auf 2500 °C (querbeheiztes Graphitrohr) bis 2800 °C (längsbeheiztes Graphitrohr) geheizt, um Restbestände der Probe zu atomisieren

Die Trockenzeiten sind dabei in jedem Temperaturprogramm fest vorgegeben. Weiterer Stand der Technik sind:

- Glebov, Roman: Verfahren zum effizienten Tracking schneller Objekte - implementiert mit CUDA am Beispiel Tischtennis spielender Roboter. Hochschule fur Technik Stuttgart. http://glebov.de/static/papers/bthes.pdf. Version: Dezember 2008. - [Online; 10-Oktober-2012]
- Gremse, Felix: Skaleninvariante Merkmalstransformation - SIFT Merkmale. Rheinisch-Westfälischen Technischen Hochschule Aachen. http://ganymed. imib.rwth-aachen.de/lehmann/seminare/bv_2005-08.pdf. Version: Januar 2006. - [Online; 22-Februar-2013]
- Helmers, Henner: Autofokus. http://www.henner.info/focus.htm. Version: 2013. - [Online; 14-März-2013]
- Jacobs, David W.: Blob Detection. University of Maryland. http://www.cs.umd.edu/-djacobs/CMSC426/Blob.pdf. Version: 2012. - [Online; 27-November-2012]
- Jung, Frank: Objekterkennung mit SIFT-Features. http://www.multimedia-computing.de/mediawiki/images/e/ea/BA_FrankJung.pdf. Version: September 2006. - [Online; 28-Januar-2013]
- Kaspers, Anne: Blob Detection. UMC Utrecht. http://igitur-archive.library.uu.nl/student-theses/2011-0505-200339/Blob%20detection%20Final%20version.pdf. Version: 2011. - [Online; 04-Januar-2013]
- Lowe, David G.: Distinctive Image Features from Scale-Invariant Keypoints. http://www.cs.ubc.ca/~lowe/papers/ijcv04.pdf. Version: Januar 2004. -[Online; 16-Januar-2013]
- Shene, Ching-Kuang: Auto Focus. http://www.cs.mtu.edu/~shene/DigiCam/User-Guide/5700/AUTO-FOCUS/Auto-Focus.html. Version: April 2004. - [Online; 10-November-2012]
- Wikimedia Foundation Inc.: Scale-invariant feature transform. http://en.wikipedia.org/w/index.php?title=Scale-invariant_feature_transform&oldid=533540415. Version: Januar 2013. - [Online; 28-Januar-2013]
- Yokono, Jerry J. ; Poggio, Tomaso: Rotation Invariant Object Recognition from One Training Example. Massachusetts Institute of Technology. http://cbcl.mit.edu/publications/ai-publications/2004/AIM-2004-010.pdf. Version: April 2004. - [Online; 01-Februar-2013]
- US 2008/0088836 A1

Der Artikel "Use of Image Processing to Aid Furnace Set-up in Electrothermal Atomic Absorption Spectrometry" von Boulo, Soraghan, Sadler, Littlejohn und Creeke in JAAS 97, Vol. 12, 293 offenbart die Verwendung einer Kamera zur Justage eines Graphitofens und eines Dosiermittels in Form einer Pipette. Das Verfahren wird zum Einrichten der Anordnung vor der Analyse verwendet.

GB 2 286 243 A offenbart eine Anordnung, die eine Videokamera zur Beobachtung des Innenraums des Graphitrohrs aufweist. Mit der Kamera wird es dem Techniker insbesondere ermöglicht, die Höhe der Pipettenspitze und die Betriebstemperaturen für jede Phase zu steuern. Es ist ferner offenbart die Bilder bei der Einstellung der Trocknungszeiten und Temperaturen für jede Probe zu verwenden. Eine darüberhinausgehende, nacharbeitbare Anleitung, wie eine solche Einstellung der Trocknungszeiten erfolgen soll, ist nicht offenbart.

In dem Artikel von Boulo et al. und in der GB 2 286 243 A wird mittels eines bzw. mehrerer beweglicher Spiegel zwischen einem Kamerastrahlengang und einem Detektorstrahlengang durch das Graphitrohr umgeschaltet.

**Offenbarung der Erfindung**

Es ist Aufgabe der Erfindung, ein Verfahren der eingangs genannten Art zu schaffen, bei dem eine höhere Richtigkeit und Reproduzierbarkeit der Messung erreicht wird und die Dauer des Temperaturprogramms unabhängig von der Probe optimiert werden kann.

Erfindungsgemäß wird die Aufgabe durch ein Verfahren nach Anspruch 1 gelöst, das unter anderem beinhaltet, dass

(f) die Bilder der Bildfolgen mit bildverarbeitenden Mitteln automatisiert verarbeitet werden;
(g) wobei ein Referenzbild des Innenraums des Graphitrohrs ermittelt wird;
(h) der Zustand der Probe durch Vergleich der Bilder der Bildfolgen mit dem Referenzbild ermittelt wird, und
i) die Temperatur des Graphitrohrs in Abhängigkeit des Zustands oder in Abhängigkeit von Parametern, welche den Zustand beschreiben, geregelt wird,

wobei die Kamera unter einem Winkel angeordnet ist, so dass der Strahlengang der Kamera den Strahlengang zum Detektor nicht beeinflusst.

Es versteht sich, dass auch weitere daraus extrahierte Referenzwerte ermittelt und verarbeitet werden können. Als Graphitrohr wird hier jede Küvette verstanden, die auf hohe Temperaturen geheizt werden kann. Während die Küvetten üblicherweise aus namensgebendem Graphit bestehen, ist es aber auch denkbar andere Materialien zu verwenden, wie etwa Tantal, Wolfram oder glasartigen Kohlenstoff.

Ein Graphitrohr umfasst neben dem eigentlichen Rohr weitere Komponenten, etwa elektrische Zuführungen und dergleichen. Der Begriff spektrale Analyse umfasst neben der Absorption auch Emission und Fluoreszenz über alle Wellenlängenbereiche sowohl simultan oder nacheinander für verschiedene Wellenlängen. Während bei der klassischen Atomabsorptionsspektroskopie nur Atome auf ihren Resonanzwellenlängen gemessen werden, ist es bei der CSAAS auch möglich Ionen und kleinere Moleküle mit der Messung zu erfassen. Unter dem Begriff Teilchenwolke werden dementsprechend alle Teilchen verstanden, insbesondere Atome, Ionen, Moleküle und Molekülfragmente.

Bei der automatischen Verarbeitung wird erfindungsgemäß ein Referenzbild erzeugt. Das Referenzbild kann für jede Messung neu erzeugt werden, etwa bevor die Probe eingeführt wird. Es kann aber auch aus vorhergehenden Messungen ermittelt und beispielsweise zur weiteren Verwendung gespeichert werden. Bei einem Vergleich wird üblicherweise eine Differenz der Werte auf einzelnen Bildpunkte gebildet. Es ist aber auch denkbar, den Vergleich durch Bildung des Quotienten oder Differenzbildung nach vorheriger Bildbearbeitung, etwa im Frequenzraum nach Fouriertransformation durchzuführen. Hierzu werden Computer oder andere datenverarbeitende Geräte als bildverarbeitende Mittel eingesetzt. Die Daten können direkt während des Messprozesses, beispielsweise als Basis für einen Regelkreis, ausgewertet werden. Es ist aber auch denkbar, die Daten getrennt auszuwerten und für nachfolgende Messprozesse im Rahmen der Methodenentwicklung, etwa in einem Assistenzsystem, zu verwenden. Die Dosiermittel für flüssige Proben sind insbesondere Pipetten oder Probengeber. Bei der Feststoffdosierung kann aber auch ein Spatel oder ein Plättchen verwendet werden, das mit der Probe eingeführt wird.

Bei einem Assistenzsystem wird ein Anwender bei der Bedienung und bei den Messvorgängen eines Gerätes, beispielsweise eines Atomabsorptionsspektrometers unterstützt. Es liefert optimierte Parameter und Werte für den Analysevorgang/-prozess, welche der Anwender verwenden kann. Das erfindungsgemäße Verfahren kann ferner die Basis eines Regelkreises bilden.

Erfindungsgemäß wird eine Bildfolge aus Bildern des Graphitrohrs automatisch aufgenommen und jedes oder mehrere der Bilder mit einem Referenzbild verglichen. Der Vergleich kann den Zeitpunkt ermitteln, zu dem ein gewünschter Zustand erreicht wird. Ein solcher Zustand kann etwa der Zeitpunkt sein, in dem die Probe vollständig getrocknet ist. Der Vergleich kann aber auch einen Zeitpunkt ermitteln, in dem ein bestimmter Zustand nicht mehr besteht. Ein solcher Zustand ist etwa erreicht, wenn sich das Dosiermittel nicht mehr im Bereich des Graphitrohrs befindet. Es kann ferner ermittelt werden, welcher Art der Zustand ist. Beispielsweise kann der Pipettierabstand des Dosiermittels oder die Lage einer Plattform erfasst werden.

Die automatische Verarbeitung ermöglicht die Verarbeitung für alle Messungen. Damit können analytische "Ausreißer" ggf. besser interpretiert und verworfen werden. Insbesondere kann aber auch ein nächstfolgender Schritt der spektralen Analyse ausgelöst werden, wenn ein ausgewählter Soll-Zustand erreicht wird. Ein solcher Zustand ist das Ende des Dosierprozesses oder das Beenden der Trocknung. Bei bekannten Temperaturprogrammen wurde immer über einen festen Zeitraum getrocknet. Dieser Zeitraum muss lang genug sein um sicherzustellen, dass die Probe wirklich vollständig getrocknet ist. Es wurde entsprechend ein Sicherheitszeitraum angehängt. Mit dem erfindungsgemäßen Verfahren wird das Ende der Trocknung zeitnah erfasst und es kann direkt mit dem nächsten Schritt begonnen werden. Entsprechend ist ein Sicherheitszeitraum nicht erforderlich. Die gesamte Dauer des Temperaturprogramms kann so verkürzt und die Temperatur nach Maßgabe des Zustands der Probe geregelt werden.

Vorzugsweise werden die Bilder der Bildfolgen nur für einen für alle Bilder der Bildfolge gleichen Teilbereich verarbeitet. Dieser Teilbereich wird dadurch ermittelt, dass zu Beginn das zugrundeliegende Bild mit einem Kantendetektor beispielsweise in Form eines Sobelfilters, oder mit einem Hochpassfilter gefiltert wird. Anschließend kann ermittelt werden, ob die Intensitätswerte im gefilterten Bild eine Abweichung von einem Mittelwert oder anderem Festwert haben, die größer ist als ein Schwellwert. Bereiche, in denen keine Änderung vorliegt, bei denen folglich die Intensitätswerte kleiner sind als ein Mittelwert oder Schwellwert, brauchen nicht verarbeitet werden. Dadurch verringert sich die Datenmenge und verkürzt sich die Verarbeitungszeit.

Bei einer bevorzugten Ausgestaltung der Erfindung wird die Lage des Graphitrohrs oder die Lage von Teilen des Graphitrohrs oder die Lage einer im Graphitrohr angeordneten Plattform mit den bildverarbeitenden Mitteln automatisiert ermittelt. Es ist aber auch möglich, die Lage des Graphitrohrs zu speichern und für weitere Messungen erneut zu verwenden.

Bei einer bevorzugten Ausgestaltung der Erfindung wird die Lage und der Pipettierabstand eines Dosiermittels zum Einführen der Probe in das Graphitrohr mit den bildverarbeitenden Mitteln automatisiert ermittelt. Diese Fähigkeit kann dazu genutzt werden, dem Anwender mittels Assistenzsystem zu helfen, den passenden Pipettierabstand einzustellen. Die Justage des Pipettierabstand ist notwendig, damit das Dosiermittel nicht gegen den Graphitrohr-Boden fährt oder der Pipettierabstand zu groß ist, zudem ist der Pipettierabstand probenabhängig.

Es kann ferner vorgesehen sein, dass das Vorhandensein und/oder die Lage von Blasen während der Trocknung der Probe mit den bildverarbeitenden Mitteln automatisiert ermittelt wird. Das ermöglicht die Erkennung einer möglicherweise falsch eingestellten Trocknungstemperatur.

Die Erfindung kann ferner vorsehen, dass das Erreichen der vollständigen Trocknung der Probe mit den bildverarbeitenden Mitteln automatisiert ermittelt wird.

Ausgestaltungen der Erfindung sind Gegenstand der Unteransprüche. Ein Ausführungsbeispiel ist nachstehend unter Bezugnahme auf die beigefügten Zeichnungen näher erläutert.

**Kurze Beschreibung der Zeichnungen**

Fig.1    ist eine schematische Darstellung eines Graphitrohrs.

Fig.2    illustriert die Lage der Kamera zum Graphitrohr in einem Atomabsorptionsspektrometer.

Fig.3    ist ein Querschnitt durch ein Graphitrohr ohne Plattform.

Fig.4    ist ein Querschnitt durch ein Graphitrohr mit Plattform.

Fig.5    ist ein Querschnitt durch das Graphitrohr aus Figur 4 mit eingeführter Pipette, aber noch ohne Probe.

Fig.6    ist ein Querschnitt durch das Graphitrohr aus Figur 4 während der Ablage der Probe mit einer Pipette.

Fig.7    ist ein Querschnitt durch das Graphitrohr aus Figur 4 mit abgelegter Probe.

Fig.8    ist ein Querschnitt durch das Graphitrohr aus Figur 4 während des Trocknungsvorgangs mit Blasenbildung.

Fig.9    ist ein Querschnitt durch das Graphitrohr aus Figur 4 mit getrockneter Probe.

Fig.10   ist eine schematische Darstellung eines mit einer Kamera aufgenommenen, unbearbeiteten Bilds des Graphitrohrs aus Figur 4.

Fig.11   ist eine schematische Darstellung des in Figur 10 dargestellten Bilds nach der Filterung mit einem Kantendetekor.

Fig.12   illustriert den ermittelten Interessenbereich.

Fig.13   ist eine schematische Darstellung des Graphitrohrs mit quadratischer Unterteilung.

Fig.14   ist eine schematische Darstellung des Graphitrohrs mit Orts- und Frequenzauflösung.

Fig.15   ist eine schematische Darstellung des horizontal gespiegelten Bodenmodells des Graphitrohrs.

Fig.16   ist eine überlagerte, schematische Darstellung des Bodenmodells mit Graphitrohr.

Fig.17   ist eine schematische Darstellung des Graphitrohrs mit erkanntem Boden

Fig.18   schematische Darstellung des Graphitrohrs mit Probe und der Funktion, welche den aktuellen horizontalen Verlauf des Bereichs des höchsten Kontrastes darstellt.

Fig.19   ist eine schematische Darstellung des getrockneten Graphitrohrs, bei welcher die Überlagerung der Funktionen aus Figur 17 und 18 den abgeschlossenen Trocknungsprozess signalisiert.

Fig.20   illustriert, wie aus einem Referenzbild des leeren Graphitrohrs und einem aktuellen Bild des Graphitrohrs mit Probe der Zustand der noch nicht getrockneten Probe durch Differenzbildung ermittelt wird.

Fig.21   illustriert, wie aus einem Referenzbild des leeren Graphitrohrs und einem aktuellen Bild des Graphitrohrs mit Probe das Erreichen des abgeschlossenen Trocknungsprozesses durch Differenzbildung ermittelt wird.

Fig.22   ist eine schematische Darstellung des Anstiegsoperators und eine Darstellung der Abstände vom Ausgangspunkt zu seinen Nachbarn.

Fig.23   zeigt ein Schnittbilds durch das Innere des Graphitrohrs während des Trocknungsprozesses bei der N-fachen Standardabweichung $N * \sigma$.

Fig.24   entspricht dem Schnittbild aus Figur 23 bei einfacher Standardabweichung $1 * \sigma$.

Fig.25   entspricht dem Schnittbild aus Figur 23 und 24 in dem nur erkannte Blasen gezeigt sind.

Fig.26   illustriert das Graphitrohr mit L'vovscher Plattform mit notwendigen Details zur Kantendetektion und der darauf folgenden Maskengenerierung

Fig.27   zeigt das Graphitrohr aus Figur 26 nach der Filterung mit einem Kantendetekor und Erkennung wichtiger Kanten.

Fig.28   zeigt die Mittels Kantendetektion erstellte Maske.

Fig.29   zeigt das Graphitrohr aus Figur 26 nach dem Ausblenden uninteressanter Bereiche durch Überlagerung mit der generierten Maske.

Fig.30   illustriert das Graphitrohr ohne L'vovscher Plattform, wobei die Maskengenerierung auf der Ermittlung der konvexen Hülle basiert.

Fig.31   zeigt die Figur 30 nach der Filterung mit einem Kantendetektor, nur die Kante des Graphitofenrohrs ist erkennbar.

Fig.32   zeigt die mittels konvexer Hülle vorläufig erstellte Maske.

Fig.33   endgültige, nach oben geöffnete Maske für Graphitrohr ohne L'vovscher Plattform.

Fig.34   zeigt das Graphitrohr aus Figur 30 nach dem Ausblenden uninteressanter Bereiche durch Überlagerung mit der generierten Maske, Figur 33.

Fig.35    illustriert, wie aus einem Referenzbild des leeren Graphitrohrs und einem aktuellen Bild des Graphitrohrs mit eingeführter Pipette der Zustand der in das Graphitrohr eingeführten Pipette durch Differenzbildung ermittelt wird.

## Beschreibung des Ausführungsbeispiels

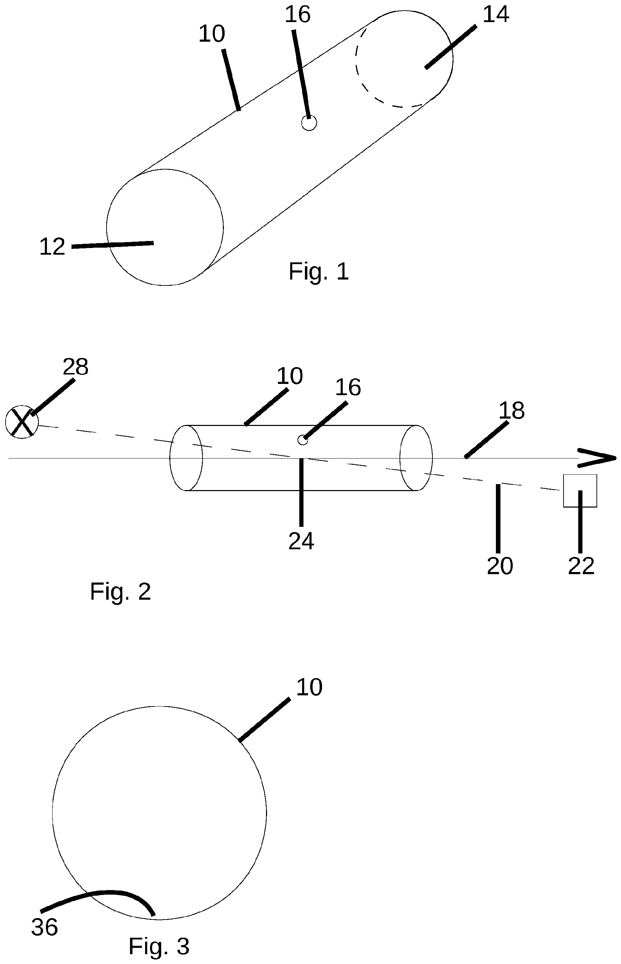

Figur 1 zeigt ein allgemein mit 10 bezeichnetes Graphitrohr. Das Graphitrohr besteht im vorliegenden Ausführungsbeispiel aus Graphit. Es werden gelegentlich aber trotz seiner Bezeichnung auch Graphitrohre aus anderen Materialien eingesetzt. Das Graphitrohr ist zylindrisch und hat zwei seitliche Öffnungen 12 und 14. Etwa mittig im Bereich der Mantelfläche ist eine Öffnung 16 für die Einführung von Proben vorgesehen. Die Proben können flüssig von Hand, etwa mit einer Pipette oder automatisiert mit einem Probengeber durch die Öffnung 16 in den Innenraum des Graphitrohrs 10 eingeführt werden.

Das Graphitrohr 10 sitzt im Strahlengang 18 eines Atomabsorptionsspektrometers oder eines anderen analytischen Gerätes, das mit einem Graphitrohr arbeitet. Dies ist in Figur 2 dargestellt. Atomabsorptionsspektrometer sind wohlbekannt und brauchen daher hier weder dargestellt, noch näher beschrieben werden. Das Graphitrohr 10 wird elektrisch schrittweise auf hohe Temperaturen geheizt, so dass die eingeführte Probe zu einer Teilchenwolke aus Ionen, Atomen und Molekülen verdampft. Form und Aufenthaltsdauer der Teilchenwolke hängen neben Art, Menge und Zusammensetzung der Proben auch unter anderem vom Zustand des Graphitrohrs während der Analyse, dem Temperaturprogramm und der Lage der Probe und des Pipettierabstandes des Probengebers, beispielsweise der Pipette ab. Mit anderen Worten: die Richtigkeit und die Reproduzierbarkeit des Messergebnisses hängen davon ab, wie gleichmäßig die Probe eingeführt wird und wie gut der Prozess kontrolliert werden kann, mit dem die Teilchenwolke erzeugt wird.

Zu diesem Zweck ist es bekannt, eine Kamera 22 im Gerät anzuordnen, mit der die Prozesse im Graphitrohr beobachtet werden können. Dies ist in Figur 2 dargestellt. Die Kamera 22 ist unter einem Winkel angeordnet, so dass der Strahlengang der Kamera 22 den Strahlengang 18 des Spektrometers im Übrigen nicht beeinflusst. Zur Beobachtung ist ferner eine LED-Leuchte 28 vorgesehen, deren Licht den Innenraum des Graphitrohrs 10 ausleuchtet. Der Strahlengang der Kamera 22 ist so ausgebildet, dass diese den Fokus im Punkt 24 im Mittelpunkt des Graphitrohrs 10 unterhalb der Öffnung 16 hat.

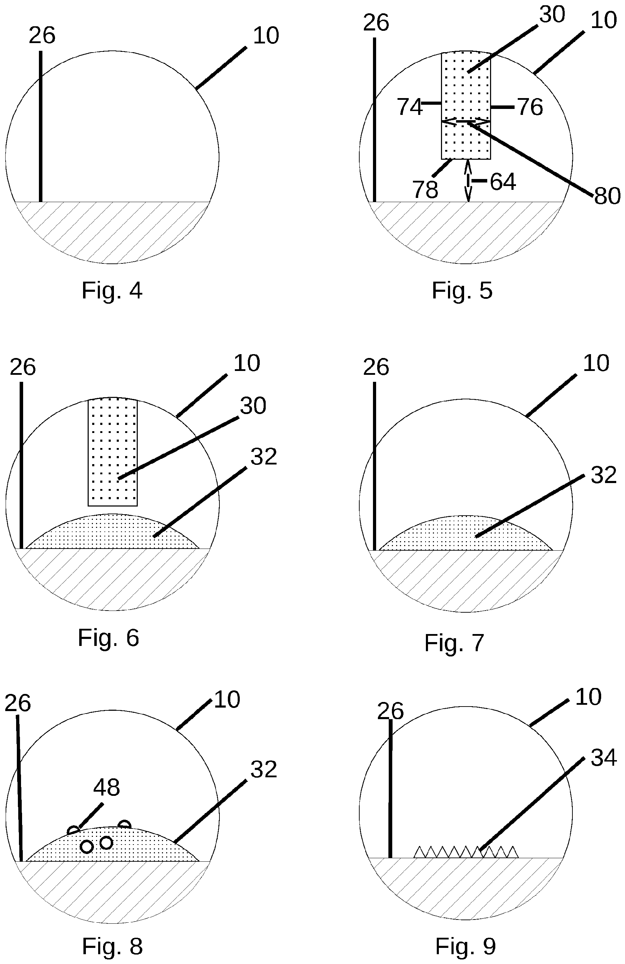

Figur 3 zeigt einen Querschnitt durch ein Graphitrohr ohne Plattform und Figur 4 zeigt einen Querschnitt durch ein Graphitrohr 10 mit L'vovscher Plattform 26. Figur 5 und Figur 6 illustrieren schematisch, wie eine Pipette 30 einen Tropfen 32 auf der Plattform 26 ablegt. Anschließend wird die Pipette 30 wieder entfernt. Diese Situation mit flüssigem Tropfen ist in Figur 7 dargestellt. Nach der Dosierung wird das Graphitrohr 10 auf bekannte Weise beheizt. Zunächst trocknet die Probe 32. Während des Trockenschrittes können sich Blasen 48 bilden, die in Figur 8 illustriert sind. Der in Figur 6 und Figur 7 flüssig dargestellte Tropfen 32 ist in Figur 9 nach der Trocknung, aber vor der Bildung der Teilchenwolke während der Atomisierung gezeigt. Die Probe 34 besteht nur noch aus wenigen festen Bestandteilen. Ähnlich wie bei Graphitrohren 10 mit Plattform 26, kann die Dosierung und Trocknung auch in Graphitrohren ohne Plattform 26 erfolgen.

Mit der Kamera 22 werden Bildfolgen aus Bildern während des Einführens der Probe und der Atomisierung aufgenommen. Jedes Bild besteht aus Bildpunkten, die in üblicher Weise in Zeilen und Spalten angeordnet sind. Die Bildfolgen werden wie folgt automatisiert verarbeitet:

Als Bildquelle wird im vorliegenden Ausführungsbeispiel eine Kamera vom Typ 21K155USB-C vom Hersteller Videology Imaging Solutions, Inc. verwendet. Die Kamera nutzt einen CCD-Sensor (Charge-coupled Device) vom Typ Sony ICX279AK. Effektiv verfügt der Sensor über 752x582 Bildelemente, auch als Bildpunkt bezeichnet mit einem Bildpunktseitenverhältnis von 9:10. Die von der Kamera gelieferten Bilddaten werden mit einer Auflösung von 720x576 Bildpunkt übertragen. In Microsoft Windows wird die Kamera mittels DirectShow angesprochen. Mit dem Computer ist die Kamera über USB 2.0 verbunden.

Als Lichtquelle 28 (Figur 2) dient eine direkte künstliche Beleuchtung auf Basis einer Leuchtdiode. Sie leuchtet das Graphitrohr 10 weitestgehend homogen aus. Im vorliegenden Ausführungsbeispiel werden Bildinformationen aus dem Graphitrohr 10 ausgewertet. Die visuellen Informationen liegen in Form einer Bildsequenz (Video) vor, wobei ein Video eine Sequenz von aufeinanderfolgenden Bildern f(x,y) darstellt. Hier bezeichnet "x" die Position eines Bildpunktes in einer Zeile und "y" bezeichnet die Position eines Bildpunkts in einer Spalte. Der Informationsgehalt eines einzelnen Bildes wird ermittelt, ebenso die Änderungen der Bildinformationen über die Zeit entsprechend dem Unterschied zwischen mehreren Bildern einer Bildfolge.

Die Bildverarbeitung umfasst folgende Schritte, die nachstehend detailliert erläutert werden:

1. Bestimmung eines interessierenden Teilbereichs der Bilder
2. Bodendetektion
3. Erkennung des Pipettierabstandes des Probengebers

4. Erkennung der vollständigen Trocknung der Probe

5. Erkennen der Annäherung an den Siedepunkt der Probe

6. Erkennung des Ofenrohr-Typs, d.h. ob eine Plattform 26 vorliegt oder nicht.

Das notwendige Bildmaterial kommt in Form eines Videodatenstroms in Farbe an einem Computer an. Jedes der Bilder besteht dabei aus Bildpunkten. Im vorliegenden Fall basiert ein Farbbild auf einem roten, grünen und blauen Farbkanal. Ein Bildpunkt eines Farbbildes wird definiert durch einen roten, grünen und blauen Farbwert. Die roten, grünen und blauen Farbinformationen werden jeweils durch 1 Byte (8 Bit) dargestellt. Jede Farbe, d.h. rot, grün und blau, wird als Intensitätswert r, g oder b in $2^8$ = 256 Abstufungen dargestellt. Dies ergibt insgesamt 16.777.216 ( = $2^8 *$ $2^8 * 2^8$ ) darstellbare Farben pro Bildpunkt. Mit anderen Worten: es kommen pro Zeitpunkt drei Bilder, je ein Bild mit roten R, grünen G und blauen B Farbinformationen, an.

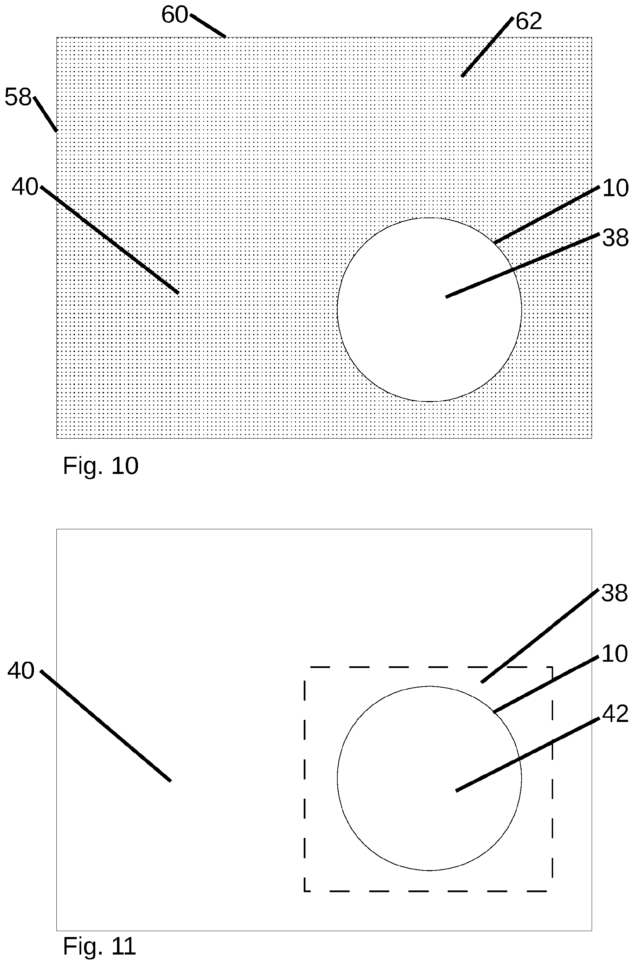

Zur weiteren Verarbeitung wird jedes Farbbild in ein Intensitätsbild aus Graustufen ohne Farbe umgewandelt. Ein Beispiel für ein solches Intensitätsbild ist in Figur 10 dargestellt.

Zur Umwandlung der Bilder mit Farbinformationen in ein Intensitätsbild wird jedem Bildpunkt an der Position (x,y) im Bild ein Grauwert $g_{x\,y}(r, g, b)$ zugeordnet nach folgender Formel:

$$g(x, y, R, G, B) = 0.2989 * R(x, y) + 0.5870 * G(x, y) + 0.1140 * B(x, y)$$

Darin bezeichnen:

$R$: Intensitätswert auf dem Bildpunkt im roten Farbkanal
$G$: Intensitätswert auf dem Bildpunkt im grünen Farbkanal
B: Intensitätswert auf dem Bildpunkt im blauen Farbkanal
g: Graustufe im Intensitätsbild

Anschließend werden zur Rauschminderung mehrere in Folge gelieferte Intensitätsbilder zeitlich gemittelt. Mit den gemittelten Intensitätsbildern $\bar{g}(x,y)$ findet anschließend die Bildauswertung statt. Die Mittelung erfolgt nach:

$$\bar{g}(x, y) = \frac{1}{N} \sum_{i=1}^{N} g_i(x, y, R, G, B)$$

Darin bezeichnet

x: Position des Bildpunktes in einer Zeile
y: Position eines Bildpunktes in einer Spalte
N: Gesamtzahl der Bilder über die zeitlich gemittelt wird
$g_i$: Graustufe des Bildpunktes (x,y) im i-ten Bild

In den Figuren 10 und 11 ist zu erkennen, dass nur ein Teilbereich 38 von Interesse ist. In diesem Teilbereich ist das Graphitrohr 10 abgebildet. Der übrige Teilbereich 40 zeigt nur die nicht interessierende Umgebung des Graphitrohrs 10. Der Rest der Bilddaten ist uninteressant. Die Größe und Position des interessanten Teilbereiches 38 im ursprünglich aufgenommenen Bild kann variieren. Dies hängt u. a. von der Justage der Kamera 22 und dem eigentlichen Gerätetyp des Atomabsorptionsspektrometers ab.

Um bei den nachstehend beschriebenen Bildauswertealgorithmen den Rechenaufwand und die Rechenzeit gering zu halten, wird der uninteressante Teilbereich 40 vom interessanten Teilbereich 38 im Bild getrennt. Dadurch wird der allgemeine Ressourcenverbrauch, etwa notwendige Rechenleistung und Zeit minimiert. Zu diesem Zweck wird der uninteressante Teilbereich 40 eines Bildes f(x,y) mit dem als "RoI" bezeichneten Verfahren entfernt. Das resultierende Bild enthält dabei idealerweise nur den interessanten Bereich g(x',y') des Bildes f(x,y). Im vorliegenden Ausführungsbeispiel entspricht f(x,y) dem gemittelten Bild $\bar{g}(x,y)$.

Es gilt für den interessierenden Teilbereich 38 g(x',y'):

$$g(x',y') = RoI\ (f(x,y))$$

mit

x', y': Lage der Bildpunkte im interessierenden Bereich.

Es gilt: x' $\leq$ x und y' $\leq$ y.

Der uninteressante Teil 40 des Bildes ist erkennbar durch relativ große und homogene Flächen, welche vom Rand 58 und 60 des Bildes 62 bis zum Interessenbereich 38 reichen. Die Intensität der Bildpunkte im uninteressanten Bereich 40 reicht von dunklem Grau bis Schwarz. Der interessante Teil 38 ist in Figur 11 zu erkennen und kann alle möglichen Werte aufweisen. Dementsprechend besitzt die Fouriertransformation der Grauwerte im interessanten Teil 38 relativ hohe Frequenzen, was auf einen starken Kontrast hinweist. Im uninteressanten Teil 40 finden sich kleinere Frequenzwerte in der Fouriertransformation. Das entspricht einem schwachen Kontrast.

Figur 11 zeigt eine als "Kontrastbild" bezeichnete Darstellung. Das Kontrastbild eines Bildes stellt sprunghafte Veränderungen der Grauwerte f von nebeneinanderliegenden Bildpunkten in dem Bild dar. In einem Kontrastbild werden Bildbereiche 42 mit hohen Frequenzen hervorgehoben. Im vorliegenden Fall werden die Kanten der Ofenrohrwand und der Plattform bzw. Ofenrohrboden hervorgehoben. Hohe Frequenzen lassen sich durch Anwendung eines Hochpasses oder mit einem Kantendetektor hervorheben.

Ein Beispiel für einen Kantendetektor ist ein Sobeloperator. Das normierte Bild besteht aus Werten zwischen 0 und 1, wobei 0.0 und 1.0 eingeschlossen sind [0.0, 1.0]. Der Wert 0 entspricht der niedrigsten Frequenz und 1 entspricht der höchsten Frequenz.

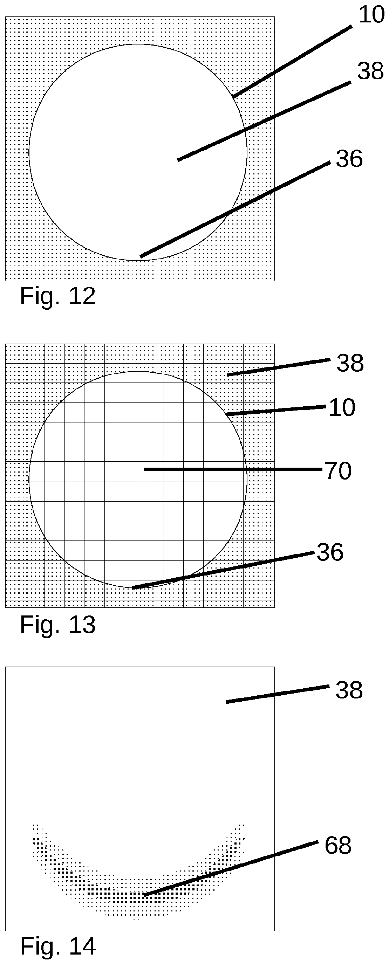

Die Anwendung eines Hochpassfilters auf das Originalbild oder das gemittelte Bild der Kamera bewirkt, dass Bereiche mit geringen Frequenzen unterdrückt und Bereiche mit hohen Frequenzen hervorgehoben werden. Auf diese Weise wird der interessante Teil 38 des Bildes vom uninteressanten Teil 40 getrennt. Dies ist in Figur 12 dargestellt.

Die Detektion des Bodens 36 oder der Plattform 26 im Graphitrohr 10 dient als Basis für die Erkennung der Pipette 30 und des Pipettierabstandes 64 (Figur 5) sowie für die Trocknungserkennung. Die Optik der Kamera 22 wird bei der Fertigung eines Spektrometers so justiert, dass genau jener Bereich des Graphitrohrs 10 im Brennpunkt 24 liegt, in dem sich auch die Öffnung 16 für die Pipette 30 im Graphitrohr 10 befindet. Die Justage findet dabei mit der in das Graphitrohr 10 eingeführten Pipette 30 statt. Genau dieser fokussierte Bereich 24 des Graphitrohrbodens ist für die Erkennung der Pipette 30, deren Pipettierabstand 64 und die Trocknungserkennung von Bedeutung, da in diesem Bereich die Pipette 30 eingeführt und die Probe 32 abgegeben wird.

Bei einfachen digitalen Kompaktkameras arbeitet der Autofokus über Kontrastmessungen. Wenn der Brennpunkt exakt eingestellt ist, liefert das Bild den höchstmöglichen Kontrast. Der Brennpunkt wird im Bild durch den Bereich mit dem höchsten Kontrast, d.h. den höchsten Frequenzen, bestimmt.

Aus einem Bild mit leerem Graphitrohr, wie es in Figur 3 dargestellt ist, kann ein Kontrastbild oder ein Bild mit Orts- und Frequenzauflösung erstellt werden. Dies ist in Figur 14 dargestellt. Daraus wird wie nachstehend beschrieben ein Modell erzeugt, welches die höchsten Kontraste repräsentiert. Wenn es möglich ist, eine Funktion an das Modell anzunähern, repräsentiert die resultierende Funktion den Graphitrohr-Boden im Bereich des Brennpunktes 24 im Bild.

Bei einer Darstellung mit Orts- und Frequenzauflösung kann unter einer Ortsangabe bzw. Koordinate eines Bildpunktes, die in diesem Bereich und direkt umgebenden Bereich vorhandenen Frequenzinformationen ermittelt werden. Im vorliegenden Fall besitzt eine zweidimensionale Darstellung mit Orts- und Frequenzauflösung eine annähernde Ortsauflösung, da vorher in einer Vielzahl von Teilbereichen des Bildes eine jeweils unabhängige Fourier-Transformation durchgeführt wird.

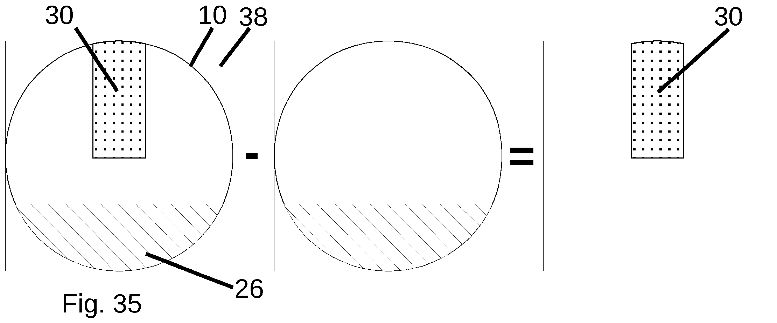

Für die Ermittlung des Pipettierabstandes 64 muss die Pipette 30 im Inneren des Graphitrohrs 10 und ihre relative Position erkannt werden. Für die Abstandsmessung ist aufgrund von exemplarspezifischer Streuung und Fertigungstoleranzen ein Bezugspunkt erforderlich. Nach Erkennen der Pipette 30 durch eine Differenzbildanalyse entsprechend Figur 35 wird die Position der Pipette 30 relativ zu den Bildrändern ermittelt. Bei der Differenzbildanalyse wird ein Differenzbild zweier Bilder f(x,y) und h(x,y) erzeugt, indem die Grauwerte für jeden Bildpunkt voneinander subtrahiert werden. Dabei wird ein aktuelles Bild mit Pipette, wie in Figur 5 dargestellt, und ein Referenzbild ohne Pipette, wie in Figur 4 dargestellt, verwendet.

Um den absoluten Pipettierabstand zu erhalten, ist ein Bezugspunkt notwendig. In diesem Fall muss es der Boden des Graphitrohrs, der in Figur 3 mit 36 bezeichnet ist, direkt unter der eingeführten Pipette 30 sein. Es ist vorgesehen, dass die Pipette und der darunterliegende Boden 36 im Brennpunkt 24 der Kamera 22 liegen.

Bei der Erkennung der vollständigen Trocknung wird ermittelt, wann eine pipettierte Probe 34 während des Trocknungsprozesses vollständig getrocknet ist. Wichtig bei der Erkennung ist, dass das Bild oder das Kontrastbild eines Graphitrohrs 10 mit getrockneter Probe 34 je nach Art und Typ der Probe ähnlich oder sogar identisch zu einem Referenzbild des leeren Graphitrohrs 10 ist. Wenn das Bild des Graphitrohrs 10 mit getrockneter Probe 34 und das Referenzbild identisch sind oder sich ähneln, kann der Zustand der vollständigen Trocknung mit Differenzbildanalyse ermittelt werden. Dabei werden ein aktuelles Bild mit pipettierter Probe und ein Referenzbild ohne Probe miteinander verglichen. Nach Abschluss des Trocknungsprozesses zeigen beide Bilder nur geringfügige Abweichungen. Das Differenzbild zeigt keine oder nur minimale Strukturen.

Bei bestimmten Probentypen, wie z. B. Blut, Schweröl oder stark salzhaltigen Lösungen, ist es möglich, dass die Differenzbildanalyse kein zufriedenstellendes Ergebnis liefert. Nach der Eintrocknung eines solchen Probentyps kann an der entsprechenden Position im Graphitrohr 10 das Bild aufgrund von Trocknungsrückständen 34 von dem des leeren Graphitrohres 10 abweichen. In diesem Fall liegt trotz vollständiger Trocknung eine strukturelle Bilddifferenz vor. Deshalb wird die Differenzbildanalyse bei solchen Proben alleine nicht ausreichen. Eine weitere Möglichkeit ist es, eine Erkennung der vollständigen Trocknung auf Basis des Kontrastes durchzuführen. Anstatt eines Kontrastbildes kann dabei auch ein Bild mit Orts- und Frequenzauflösung, wie in Figur 14 dargestellt, verwendet werden. Dabei wird das aktuelle Bild in eine entsprechende Darstellung überführt. Die Kontrastbilder von einem Bild ohne Probe und einem Bild mit noch nicht getrockneter Probe unterscheiden sich generell. Je weiter sich die Probe der vollständigen Trocknung während der Trocknungsphase annähert, umso ähnlicher werden die Kontrastbilder.

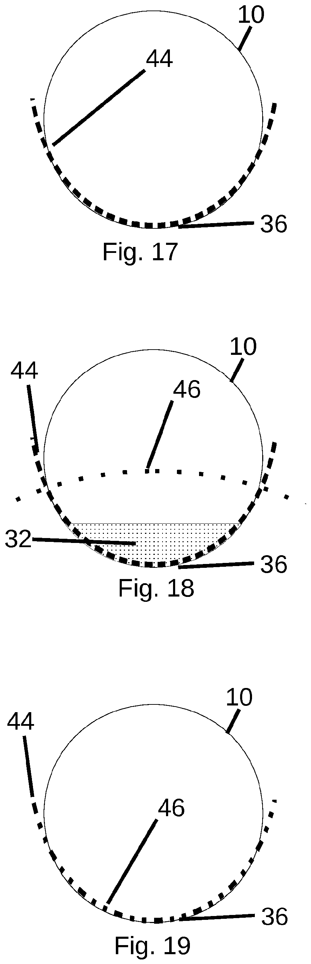

Zur Erkennung der vollständigen Trocknung über den Kontrast ist ein Referenzbild notwendig. Das Referenzbild ist im vorliegenden Ausführungsbeispiel ein Kontrastbild eines leeren Graphitrohrs ohne pipettierte Probe. Während der Trocknung wird zu jedem von der Kamera 22 gelieferten Bild ein Kontrastbild erstellt. Nachdem das Kontrastbild erstellt wurde, wird dieses mit dem Referenzbild verglichen. Ergibt der Vergleich eine überwiegende Übereinstimmung, so kann angenommen werden, dass die Probe 34 getrocknet ist, wie dies in Figur 9 dargestellt ist. Für den Vergleich wird das Ergebnis der oben beschriebenen Bodendetektion verwendet. Die Bodenerkennung des Graphitrohrs 10 baut auf der Auswertung eines Kontrastbildes auf. Das Kontrastbild liefert mit Bodendetektion eine zugehörige Funktion, die in Figur 17 dargestellt ist. Die Bodendetektion wird vor der Pipettierung der Probe 32 in den leeren Innenraum des Graphitrohrs 10 und nach der Eintrocknung der Probe 34 annähernd gleiche Ergebnisse liefern. Dies ist in Figur 19 dargestellt. Während der in Figur 18 dargestellten Trocknungsphase befindet sich die Probe 32 in flüssiger Form auf dem Boden 36 des Graphitrohrs 10 bzw. auf der Plattform 26 was zu einer erkennbaren Abweichung führt.

Die Annäherung an den Siedepunkt zeigt sich durch die Bildung von Blasen 48 in und auf der Probe. Die Blasen sind in Figur 8 dargestellt. Objekte in Form von Blasen 48 heben sich dank der direkten Beleuchtung des Graphitrohrs 10 deutlich von ihrer Umgebung ab. Im Gegensatz zu ihrem Umfeld besitzen diese Objekte 48 eine relativ hohe Intensität.

Um entsprechende Objekte 48 herauszufiltern, wird im vorliegenden Ausführungsbeispiel die Methode Laplacian of Gaussian, auch bekannt als Marr-Hildreth-Operator, oder die Methode Difference of Gaussian angewandt. Die Methoden sind allgemein bekannt, beispielsweise aus der im Abschnitt "Stand der Technik" angegebenen Veröffentlichung von Roman Glebov oder aus dem Internet unter http://www.cs.unc.edu/~lazebnik/spring11/lec08blob.pdf und https://en.wikipedia.org/wiki/Blob_detection und brauchen hier daher nicht näher erläutert werden.

Bei Anwendung einer dieser Methoden werden Objekte mit einem Intensitätsverlauf ähnlich der Gauß-Funktion am stärksten hervorgehoben. So werden vor allem rotationssymmetrische Objekte betont, welche ein lokales Maximum und eine bestimmte Skalierung besitzen. Mit welcher Größe Objekte hervorgehoben werden, wird über die Skalierung der Gauß-Funktionen gesteuert. Die Blasen 48 auf der Probenoberfläche sind sphärisch geformt. Ihr Intensitätsverlauf ähnelt im Bild aufgrund der Beleuchtung einer Gauß-Glocke. Die Blasen lassen sich durch Anwenden der Laplacian of Gaussian- bzw. der Difference of Gaussian-Methode hervorheben. Da sich die Objekte in ihrer Größe unterscheiden, werden die Methoden Laplacian of Gaussian oder Difference of Gaussian mit unterschiedlichen Skalierungen durchgeführt.

Die Laplacian of Gaussian- oder Difference of Gaussian-Methode hebt mögliche Kandidaten für die gesuchten Objekte hervor und trifft eine Vorauswahl von möglichen Objekten. Bei den Kandidaten handelt es sich um gesuchte Objekte in Form von Blasen, die nach Falsch-Positiv-Treffern und nach Richtig-Positiv-Treffern selektiert werden.

Die Selektion kann mit verschiedenen Verfahren erfolgen. Es ist von Bedeutung, dass die Objekte im Vergleich zum Gesamtbild relativ klein sind. Sie erscheinen trotz des flachen Betrachtungswinkels kreisähnlich.

Folgende Ansätze werden betrachtet:

1. Detektion von kegelförmigen, rotationssymmetrischen Objekten. Diese haben eine kreisförmige Grundfläche. Der Intensitätsverlauf der Kandidaten wird analysiert und entsprechend ausgewählt.
2. Vergleich des Umfangs des Kandidaten mit seiner Fläche und entsprechende Auswahl.

Für die Implementierung wird bei diesem Ausführungsbeispiel zunächst wie oben beschrieben ein Intensitätsbild aus den drei Farbkanälen erstellt. Jede Bildfolge aus mehreren in Folge von der Kamera gelieferten Bildern des Graphitrohrs wird zur Rauschunterdrückung zeitlich gemittelt.

Das Bild weist im Interessenbereich 38 im Vergleich zum uninteressanten Bereich 40 einen hohen Kontrast auf. Zur Trennung wird ein Sobel-Operator zum Erkennen hoher Frequenzen verwendet. Dabei werden Bereiche mit hohen Frequenzen im Bild hervorgehoben und Bereiche mit niedrigen Frequenzen unterdrückt.

Der Sobel-Operator gehört zu der Kategorie der Kantendetektions-Filter. Der Filter wird per Faltung auf ein Bild angewendet und berechnet dabei eine Näherung der ersten Ableitung. Aus dem Intensitätsbild entsteht somit ein Gradientenbild. Bereiche mit sprunghaften Intensitätsänderungen und den zugehörigen hohen Frequenzen in der Fouriertransformation bekommen hohe Werte zugeordnet und umgekehrt. Hohe Frequenzen werden hervorgehoben. Der Sobel-Operator wirkt nur in eine Koordinatenrichtung. Jedes Bild wird daher zweimal gefiltert: einmal mit dem Sobel-Operator und einmal mit einem transponierten Sobel-Operator.

Der verwendete Sobel-Operator kann dargestellt werden durch:

| -1 | 0 | +1 |
|----|---|----|
| -2 | 0 | +2 |
| -1 | 0 | +1 |

| +1 | +2 | +1 |
|----|----|----|
| 0  | 0  | 0  |
| -1 | -2 | -1 |

$$h_X \qquad\qquad h_Y$$

und ist in https://de.wikipedia.org/w/index.php?title=Sobel-Operator&oldid=128396157 näher erläutert. Der Sobel-Operator wird zweimal auf das Eingangsbild durch Faltung angewandt. Die erste Anwendung betrifft vertikale ($h_X(x,y)$) und die zweite Anwendung horizontale ($h_Y(x,y)$) Strukturen im Bild. Dabei wird der Sobel-Operator um 90° rotiert.

Anhand eines Schwellwertes wird das Resultat f '(x, y) in ein Binärbild b(x, y) überführt. Der Schwellwert wird so gewählt, dass idealerweise nur der Interessenbereich 38 Elemente mit dem Wert 1 enthält und die restlichen Elemente generell nur den Wert 0. Durch Ermitteln der Elemente mit 1 werden anhand deren Positionen die maximalen Ausmaße und die Position des Interessenbereiches ermittelt. Durch die Ausmaße und die Position des Interessenbereiches relativ zum gesamten Bild f(x,y), wird der Interessenbereich g(x,y) vom uninteressanten Bereich getrennt. In der horizontalen x-Achse definieren die kleinste (xmin) und die größte (xmax) x-Koordinate aller Elemente mit Wert 1 die Grenzen des Interessenbereiches auf der x-Achse. Ebenso definieren die kleinste ($y_{min}$) und die größte ($y_{max}$) y-Koordinate aller Elemente mit Wert 1 die Grenzen des Interessenbereiches auf der y-Achse (vertikale Achse). Das Gesamtresultat dieses Verfahrens sind 4 Koordinaten $x_{min}$, $x_{max}$, $y_{min}$, $y_{max}$, welche die Position des Interessenbereiches 38 in Figur 11 relativ zum Gesamtbild beschreiben.

Zusammengefasst lässt sich der Algorithmus wie folgt darstellen:

1. Intensitätsbild f(x, y), mit Ursprungsabmaßen, durch Faltung mit dem Sobel-Operator ($h_X(x,y)$ und $h_Y(x,y)$) filtern.

$$i(x,y) \,=\, f(x,y) \,\otimes\, h_X(x,y)$$

$$j(x,y) \,=\, f(x,y) \,\otimes\, h_Y(x,y)$$

$$f'(x,y) = \sqrt{i^2(x,y) \,+\, j^2(x,y)}$$

2. Resultat f'(x,y) der Filterung in ein Binärbild b(x,y) überführen, anhand eines Schwellwertes n.

$$b(x, y) = \begin{cases} 0, \text{falls } f'(x,y) \,<\, n \\ 1, \text{falls } f'(x,y) \,\geq\, n \end{cases}$$

3. Position der Elemente mit Wert 1 im Binärbild b(x, y) ermitteln.

4. Abgrenzen des Teilbereichs unter Berücksichtigung dieser Positionen $x_{min}$, Xmax, $y_{min}$, ymax, wobei

$X \subseteq \mathbb{N}$ *(Menge der Bildelemente in X - Dimension)*
$Y \subseteq \mathbb{N}$ *(Menge der Bildelemente in Y - Dimension)*
$S^2 \subseteq X \times Y$ *(interessanter Teilbereich des Bildes)*
$(x,y) \in X \times Y$
$x_{min}, x_{max} \in X$
$y_{min},\ Ymax \in Y$

$$u(x,y)$$
$$= \begin{cases} 1, & falls \quad \exists x'(x' \in X \wedge b(x',y) = 1) \wedge \exists y'(y' \in Y \wedge b(x,y') = 1) \\ 0, & sonst \end{cases}$$

$$[x_{min}, x_{max}] \times [y_{min}, y_{max}] :=$$

$$\{(x', y') \in S^2 | (x_{min} \le x' \le x_{max}, y_{min} \le y' \le y_{max}) \wedge u(x', y') = 1\}$$

Wie oben beschrieben folgt nun die Detektion des Bodens 36 oder der Plattform 26 im Graphitrohr 10. Die Bodendetektion basiert auf der Auswertung eines Intensitätsbildes f(x,y), welches das leere Graphitrohr 10 darstellt. Dies ist in Figur 3 gezeigt. Dazu muss zuvor das Farbbild mit dem leeren Graphitrohr wieder für den interessierenden Bereich 38 auf oben beschriebene Weise in ein Intensitätsbild konvertiert werden.

Zu Beginn der Bodendetektion wird das Bild f(x,y), wie in Figur 12 dargestellt, mit einem Hochpassfilter $h_p(x, y)$ gefiltert. Aus Performanz-Gründen wird dies mittels Fouriertransformation im Frequenzraum durch eine Multiplikation mit dem Filter ausgeführt. Es ist aber auch möglich eine Faltung im Ortsraum durchzuführen. Alternativ ist es möglich, das Bild f(x, y) in eine Darstellung mit Orts- und Frequenzauflösung zu konvertieren. Das Resultat ist die Darstellung g(x,y).

Ein Verfahren zur Erzeugung einer Darstellung mit Orts- und Frequenzauflösung, wie in Figur 14 gezeigt, basiert auf der Unterteilung des Eingangsbildes in kleine vorzugsweise quadratische Teilbereiche 70, die in Zeilen und Spalten angeordnet sind. Dies ist in Figur 13 gezeigt. In jedem der Teilbereiche 70 liegt eine Vielzahl von einzelnen Bildpunkten. Jedes einzelne Teilbild 70 wird anschließend durch Fouriertransformation in den Frequenzraum überführt. Jedes Element wird durch eine komplexe Zahl repräsentiert. Die Intensität eines jeden Elementes eines Teilbildes 70 gibt im Frequenzraum die im Teilbild vorkommenden Frequenzanteile an. Eine relativ hohe Intensität repräsentiert große Frequenzen. Eine relativ geringe Intensität steht für kleine Frequenzen in dem entsprechenden Teilbild. Die Genauigkeit dieses Verfahrens hängt von der Größe der Teilbereiche 70 ab. Je kleiner die Teilbereiche 70 sind, um so genauer ist das Verfahren. Bei der Bodendetektion liefert diese Methode auf einfache Weise gute Ergebnisse. Ein Beispiel 68 ist in Figur 14 dargestellt.

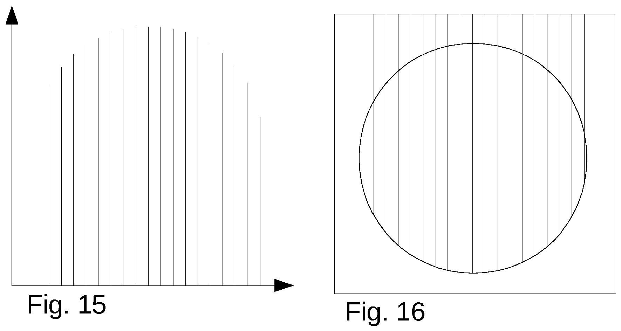

Die Bodendetektion basiert auf einer Darstellung g(x,y) des Bildes mit Orts- und Frequenzauflösung. Mit Hilfe dieser Darstellung wird der Boden 36 des Graphitrohrs 10 oder der Plattform 26 ermittelt. Im nächsten Schritt wird ein Modell erzeugt, welches die höchsten Frequenzen in der Darstellung g(x, y) repräsentiert. Dies ist in Figur 15 und 16 illustriert. In jeder Spalte der Darstellung g(x, y) wird der höchste Wert gesucht und die entsprechende Position des Wertes in dieser Spalte in einen Vektor übertragen. So ist die Anzahl der Vektorelemente des Modells M durch die Spaltenanzahl der Darstellung g(x,y) bestimmt. Jedes Element n des Vektors enthält dabei die y-Koordinate des Bildpunkts mit der höchsten Intensität in der Spalte n der Darstellung g(x, y). So besitzt z. B. der zweite Eintrag des Modellvektors den Wert 5. Das bedeutet, dass in der zweiten Spalte in dem Bereich des fünften Elements bzw. Bildpunktes der Darstellung g(x, y) die höchste Frequenz und der höchste Kontrast vorliegt.

$$X \subseteq \mathbb{N}$$

$$Y \subseteq \mathbb{N}$$

$$P \subseteq \mathbb{R}$$

g:X x Y → P

maxPos: X → Y

maxPos(x) := {y ∈ Y|∀r E P: r ≤ g(x,y)}

T ⊂ X

U = X\T

$$T = [x\_min, x\_max] := \{x \in X | (x\_min \le x \le x\_max) \wedge$$

$$\exists a \in U := \big((a < x_{min} \vee a > x_{max}) \wedge maxPos(a) = 0\big)\}$$

$$M = \begin{bmatrix} maxPos(x_{min}) \\ maxPos(x_{min} + 1) \\ \vdots \\ maxPos(x_{max} - 1) \\ maxPos(x_{max}) \end{bmatrix}$$

Die Folge der Einträge in dem Modell-Vektor repräsentiert bereits u. a. den Boden 36 bzw. die Plattform 26. Dies ist in Figur 16 dargestellt. Es ist allerdings nicht ersichtlich, wo der Boden in horizontaler Ausrichtung begrenzt wird, da weitere vorhandene Strukturen im Bild diese Erkennung stören. Außerdem enthält das Modell einen Rauschanteil. Aus diesem Grund wird das Modell weiter wie folgt verarbeitet. Das Modell M (Boden) des Graphitrohres 10 lässt sich annähernd durch eine quadratische Funktion ausdrücken. Im nächsten Schritt wird dem Modell eine Funktion angepasst. Durch Ausgleichsrechnung wird dem Modell ein Polynom *bottom(x)* beispielsweise zweiten Grades angepasst. Durch das Anpassen der Funktion an das Modell lassen sich ferner auch der Beginn und das Ende des Graphitrohrs im Bild bestimmen. Durch die Anpassung lassen sich Ausreißer und Rauschen im Ursprungsmodell reduzieren. Des Weiteren werden störende Strukturen außerhalb des Graphitrohrbodens, d.h. links und rechts vom Graphitrohrboden entfernt. Die Funktion wird durch iterative Ausreißereliminierung wie folgt nach dem 3-Sigma-Kriterium angepasst, wobei gilt:

$$P\{|M - E(M)| < 3\sigma\} = 0{,}9973$$

$$\hookrightarrow P\{E(M) - 3\sigma < M < E(M) + 3\sigma\} = 0{,}9973$$

Nach der Anpassung wird die Standardabweichung zu den Modellwerten ermittelt.

Modellwerte, die außerhalb der dreifachen Standardabweichung liegen, werden aus dem Modell entfernt. Die Eliminierung der Ausreißer wird solange auf das jeweils neue Modell angewandt, bis keine Ausreißer mehr vorhanden sind.

Nach der Ausreißereliminierung repräsentiert die angepasste Funktion 44 den Boden 36 des Graphitrohres bzw. die Plattform 26. Dies ist in Figur 17 dargestellt. Außerdem kann anhand des Modells M, in dem die Ausreißer eliminiert wurden, erkannt werden, wo der Boden 36 des Graphitrohres oder die Plattform 26 in der Horizontalen (x-Achse) beginnt ($x_{min}$) und endet (xmax).

Eine Zusammenfassung des Verfahrens:

1. Intensitätsbild f(x, y) vom leeren Graphitrohr mit Hochpassfilter $h_p(x, y)$ filtern oder in eine Darstellung mit Orts- und Frequenzauflösung konvertieren. Das Resultat ist g(x, y).

2. In g(x, y) in jeder Spalte den höchsten Wert suchen und die entsprechende Position in einen Vektor einfügen. Der Vektor repräsentiert ein Modell, wobei der Vektor so viele Elemente besitzt, wie die Darstellung g(x, y) Spalten hat.

3. Durch iterative Ausreißereliminierung nach dem 3-Sigma-Kriterium wird ein Polynom *bottom(x)* an das Modell angepasst. Dadurch wird auch die Begrenzung des Bodens bestimmt.

Zur Ermittlung des Pipettierabstandes 64 wird die tiefste Position der Pipette 30 und als Bezugspunkt die Position des darunterliegenden Bodens 36 oder der Plattform 26 benötigt. Dafür müssen jeweils die Pipette 30 und der Boden 36 oder die Plattform 26 anhand von Bildinformationen erkannt werden. Die Pipette 30 wird durch eine Differenzbildanalyse erkannt. Dabei wird das aktuelle Bild, etwa aus Figur 5 mit einem Referenzbild, etwa Figur 4 verglichen. Für die Differenzbildanalyse liegt das Referenzbild h(x, y) und das aktuelle Bild mit Pipette f(x, y) als Intensitätsbild vor.

Das resultierende Differenzbild g(x,y) enthält alle Unterschiede zwischen beiden Eingangsbildern. Dies ist in Figur 35 dargestellt. Neben minimalen Unterschieden im ganzen Bild aufgrund von Rauschen ist das in diesem Fall hauptsächlich die Pipette 30. Im Vergleich sind die Differenzwerte der Pipette 30 größer als die durch Rauschen verursachten Differenzen. Anhand eines passend gewählten Schwellwertes wird die Pipette 30 vom Rauschen getrennt. Anschließend wird die Position der Pipette 30 bestimmt. Dazu gehören der linke Rand 74, der rechte Rand 76 und die untere Grenze 78 der Pipette 30. Die Koordinaten x und y werden relativ zu den Bildabmaßen auf eins normiert und einem Merkmalsvektor hinzugefügt. Zusätzlich beinhaltet der Merkmalsvektor die Breite 80 der Pipette.

Wenn der Merkmalsvektor innerhalb vorgegebener Grenzen liegt, wird die Änderung im Bild als Pipette bestätigt. Dies wird auch Klassifikation genannt. Die Grenzwerte werden dabei von Hand vorgegeben. Alternativ lassen sich die Grenzwerte auch anlernen.

Um den Abstand 64 zwischen der Pipette 30 und dem Boden 36 oder der Plattform 26 zu bestimmen, wird zunächst die Lage des Bodens wie vorstehend beschrieben detektiert. Dabei wird dem Boden 36 des Graphitrohres 10 bzw. der Plattform 26 ein Polynom *bottom(x)* angepasst.

Anhand der an den Boden 36 bzw. an die Plattform 26 angepassten Funktion 44 und der Position der Pipette 30 im Bild kann der Pipettierabstand 64 der Pipette 30 berechnet werden. Dazu wird die Differenz aus der tiefsten Pipettenposition und der höchsten Stelle des Bodens 36 bzw. der Plattform 26 unter der Pipette 30 gebildet. Das Resultat ist der Pipettierabstand 64.

Das Verfahren kurz zusammengefasst:

1. Erkennen der Pipette 30 und ihrer Position im Bild anhand der Differenzbildanalyse.
2. Ermitteln der Position des Bodens 36 oder der Plattform 26 unterhalb der Pipette 30 über Bodendetektion.
3. Errechnen des Pipettierabstandes 64 anhand der Pipettenposition im Bild und der Bodenposition des Graphitrohres 10.

Die Erkennung der vollständigen Trocknung basiert hauptsächlich auf dem Vergleich von Kontrastbildern oder von Darstellungen mit Orts- und Frequenzauflösung mit Hilfe der oben erläuterten Bodendetektion. Dabei wird jedes aktuelle Bild, etwa Graphitrohr mit Probe, dem Referenzbild gegenübergestellt. Zusätzlich kann die Erkennung auch durch eine Differenzbildanalyse erfolgen.

Das aktuelle Bild und das Referenzbild werden zu Beginn jeweils in ein Intensitätsbild konvertiert. Anschließend werden die Intensitätsbilder einzeln der vorstehend beschriebenen Bodendetektion übergeben. Diese ermittelt eine Funktion 44, wie sie in Figur 17 dargestellt ist. Eine solche Funktion 44 ist beispielsweise ein Polynom. Die Funktion 44 repräsentiert den Boden 36 des Graphitrohres 10 oder die Plattform 26. Die Funktion 44 besitzt einen stetigen Verlauf quer durch das übergebene Bild, etwa von links nach rechts. Bei dem Referenzbild stellt die Funktion 44 den tatsächlichen Verlauf des Bodens 36 des Graphitrohrs 10 oder der Plattform 26 dar. Beim aktuellen Bild variiert der Verlauf der Funktion 46 je nach Bildinhalt. Dies ist in Figur 18 illustriert. Je weiter der Eintrocknungsprozess der Probe fortschreitet, umso ähnlicher muss der Verlauf der Funktion 46 des aktuellen Bildes, der Referenzfunktion 44 und dem Boden 36 bzw. der Plattform 26 werden.

Sobald die Funktionen 44 und 46 wie in Figur 19 illustriert identisch oder annähernd identisch sind, wird die Probe 34 als eingetrocknet angesehen. Die Ähnlichkeit wird über Erreichen eines Schwellwertes ermittelt. Die Funktionen werden anhand ihrer Koeffizienten verglichen. Der Vergleich bezieht sich immer auf einen Schwellwert. Je nach Anwendungsfall bedeutet "Vergleich" entweder die direkte Bewertung eines Wertes mit Schwellwert, die Differenzbildung der Intensitätswerte oder die euklidische Distanz zwischen Vektoren als Koeffizientenvergleich. Es kann aber auch eine Quotientenbildung als Koeffizientenvergleich erfolgen. Anschließend wird ggf. die Differenz, die Distanz oder der Quotient anhand eines Schwellwertes bewertet. Im vorliegenden Ausführungsbeispiel werden die Koeffizienten einer Funktion als Vektor interpretiert. Aus beiden Vektoren wird ihre euklidische Distanz ermittelt. Ist die euklidische Distanz kleiner oder gleich eines definierten Schwellwertes $S_{Akzeptanz1}$, werden beide Funktionen als hinreichend ähnlich angesehen. Zur Erhöhung der Richtigkeit wird der Vergleich mehrmals nacheinander durchgeführt und geprüft, ob das passende übereinstimmende Ergebnis erzeugt wird. Nur dann wird die Probe 32 auf dem Boden 36 bzw. der Plattform 26 als vollständig getrocknet eingestuft.

Während der Trocknungsphase werden fortlaufend die aktuellen Bilder des Graphitrohrs ausgewertet.

Auch ist die Erkennung der vollständigen Trocknung über eine Differenzbildanalyse möglich. Dabei wird ebenfalls das aktuelle Bild f(x,y) während des Trocknungsprozesses mit dem Referenzbild h(x,y) verglichen. Das aktuelle Kamerabild ist mit f(x,y) bezeichnet, das Referenzbild ist mit h(x,y) bezeichnet und das Vergleichsresultat ist:

$$g(x,y) \ = \ | \, f(x,y) - h(x,y) \, |$$

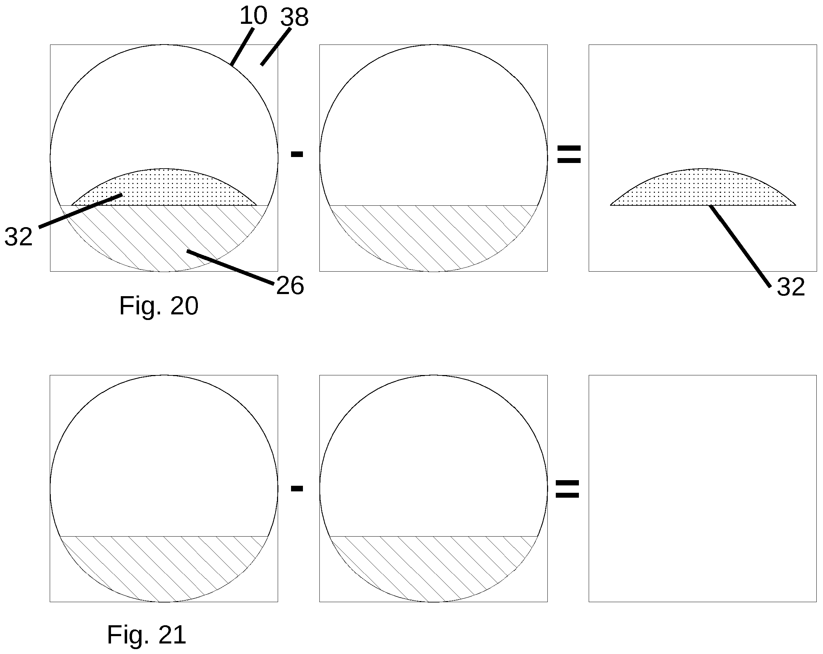

Das Resultat g(x, y) ist in Figur 20 dargestellt und enthält alle Unterschiede zwischen beiden Eingangsbildern. Die Unterschiede sind neben minimalen Unterschieden im ganzen Bild aufgrund von Rauschen im Wesentlichen die Differenzen bezüglich des aktuellen Trocknungsfortschrittes. Mit einem passenden Schwellwert SRauschen wird das Rauschen aus dem Differenzbild entfernt und dadurch nur noch die wesentlichen Unterschiede dargestellt.

Wenn keine Unterschiede mehr vorhanden sind und das Differenzbild nur noch aus Null-Einträgen besteht wird der Boden als getrocknet eingestuft. Diese Situation ist in Figur 21 dargestellt. Auch wenn das Differenzbild nur noch wenige Unterschiede bezüglich eines weiteren vordefinierten Schwellwertes $S_{Akzeptanz2}$ darstellt, wird der Boden als getrocknet eingestuft. Aus Gründen der Zuverlässigkeit muss der Vergleich ebenfalls mehrfach nacheinander das entsprechende übereinstimmende Ergebnis liefern, damit der Boden als vollständig getrocknet eingestuft wird.

Die zweite Methode über Differenzbildanalyse der Trocknungserkennung unterstützt die oben vorgestellte erste Methode, welche auf der Bodendetektion basiert. Die Gesamtgenauigkeit wird unter der folgenden Bedingung besser: Die einzutrocknende Probe darf keine oder annähernd keine optisch erkennbare Rückstände, d.h. Partikel, die aufgrund ihrer Größe von der Kamera erfasst werden, hinterlassen, damit die Differenzbildanalyse zuverlässige Ergebnisse liefert. Außerdem kann durch den Einsatz beider Methoden die Zeit von der eigentlichen Trocknung im Graphitrohr bis zur Erkennung der Trocknung durch den Algorithmus verkürzt werden.

Wenn Proben eingetrocknet werden, die optisch erkennbare Rückstände 34 nach der Trocknung hinterlassen, kann die zweite Methode nicht verwendet werden. Wie beschrieben, liefert die zweite Methode bei solchen Proben unter Umständen kein nutzbares Resultat. In diesem Fall kann nur die erste Methode mit Bodendetektion verwendet werden, da diese unabhängig von der Probe ein zuverlässiges Ergebnis liefert.

Die Erkennung kurz zusammengefasst:

1. Verfahren Kontrastbildanalyse:

a) Dem Referenzbild mit der Bodendetektion eine Funktion (Polynom) zuordnen.
b) Dem aktuellen Bild mit der Bodendetektion eine Funktion (Polynom) zuordnen.
c) Über die euklidische Distanz die Koeffizienten beider Funktionen vergleichen. Ist die Distanz kleiner dem Schwellert $S_{Akzeptanz1}$, wird die Probe als getrocknet eingestuft.

2. Verfahren Differenzbildanalyse:

a) Differenz g(x, y) aus aktuellem Bild f(x, y) und Referenzbild h(x, y) bilden.
b) Rauschen in g(x, y) entfernen mit Schwellwert SRauschen.
c) Anhand des Schwellwertes $S_{Akzeptanz2}$ den Boden als getrocknet oder nichtgetrocknet einstufen.

Die Annäherung an den Siedepunkt der Probe wird durch das Auftreten von Blasen 48 erkannt. Dies ist in Figur 8 dargestellt. Blasen 48 heben sich durch eine relativ hohe Intensität von der restlichen Probe 32 ab. Allgemein kann das gesamte Verfahren als Merkmalsdetektor für rotationssymmetrische Objekte in einem Bild angesehen werden. Während der Trocknungsphase der Probe 32 werden fortlaufend Bilder der Kamera 22 ausgewertet. Unabhängig vom verwendeten Verfahren müssen zu Beginn eventuell vorkommende Blasen 48 hervorgehoben werden. In dieser Implementierung wird die Methode Difference of Gaussian verwendet. Da dieses Verfahren fortlaufend auf die eingehenden Intensitätsbilder angewandt wird, werden zu Beginn die entsprechenden Filterkerne mit unterschiedlichen Skalierungen erzeugt. Dazu wird eine Reihe von Filterkernen generiert, welche bestimmten Bedingungen unterliegen. Für jede mögliche Kombination von den Mengen $Q_1 \subset \mathbb{R}$ und $Q_2 \subset \mathbb{R}$ wird ein Filterkern generiert, wobei gilt, dass $\sigma_1 \in Q_1$, $\sigma_2 \in Q_2$ und $\sigma_1 > \sigma_2$ ist.

Das aktuelle Intensitätsbild wird daraufhin im Frequenzraum mit jedem generierten Filterkern gefiltert. Jedes Filter-Resultat $g_n$(x, y) kann dabei Informationen zu Objektes 48 in der entsprechenden Skalierungsstufe ($\sigma_1$ und $\sigma_2$) enthalten. Die Wirkungsweise lässt sich gut anhand der Gauß-Pyramide darstellen. Dabei werden mehrere Skalierungsstufen des Intensitätsbildes erstellt. Das Filterergebnis ist dabei die Differenz zwischen zwei gewählten Skalierungsstufen des Intensitätsbildes. Alle Filter-Resultate werden daraufhin zu einem Resultat g(x, y) kombiniert.

Dazu wird an jedem Punkt (x, y) über alle Filter-Resultate $g_n$(x, y) der größte Wert gesucht und in das Resultat g(x, y) an die Position (x, y) übernommen. Alle möglichen Kandidaten für Blasen sind im Gesamt-Resultat g(x, y) hervorgehoben. Die negativen Werte werden generell verworfen, da sie für dieses Verfahren keine Bedeutung haben. Durch eine geeignete Methode müssen die Kandidaten für die Objekte 48 selektiert werden.

Allgemein ist die Erkennung kreisähnlicher Objekte über eine Hough-Transformation zur Kreiserkennung möglich. Aufgrund der geringen Größe der Blasen ist dies im vorliegenden Fall aber nicht machbar.

$$g(x, y) = \max_n g_n(x, y)$$

Es bieten sich verschiedene Verfahren an:

Verfahren 1

Die erste Methode basiert auf der Detektion von kegelförmigen und rotationssymmetrischen Objekten. Hierbei werden kegelähnliche Objekte hervorgehoben und nicht kegelähnliche Objekte unterdrückt bzw. gedämpft. Dabei wird die Intensität eines Elementes des Gesamt-Resultates g(x, y) nicht als Intensität verwendet, sondern als Koordinate für eine dritte Achse (z-Achse).

Aus Effizienzgründen findet eine Vorauswahl von möglichen Kandidaten im GesamtResultat g(x,y) statt. Dabei wird alles verworfen, was unterhalb der einfachen Standardabweichung 1 * $\sigma$ von g(x, y) liegt. Hierdurch entsteht das Zwischenergebnis zw(x,y). Im zweiten Schritt werden alle lokalen Maxima in zw(x, y) gesucht und als neue mögliche Kandidaten betrachtet. Bis zu diesem Punkt basiert das Vorgehen bei der Erkennung der Annäherung an den Siedepunkt der Probe auf der Anwendung der Difference of Gaussian-Methode, mit verschiedenen Skalierungen, auf einem Eingangsbild und auf dem Herausfiltern von lokalen Maxima.

Bei dem oben vorgestellten Verfahren werden alle Ergebnisbilder zu einem Gesamt-Resultat zusammengeführt und anschließend auf diesem zweidimensionalen Resultat die Maxima-Detektion durchgeführt.

Durch die Vorauswahl der möglichen Kandidaten muss im folgenden Hauptschritt des Verfahrens nicht das komplette Bild g(x, y) gefiltert werden, sondern nur die Positionen, an denen mögliche Kandidaten vorhanden sind.

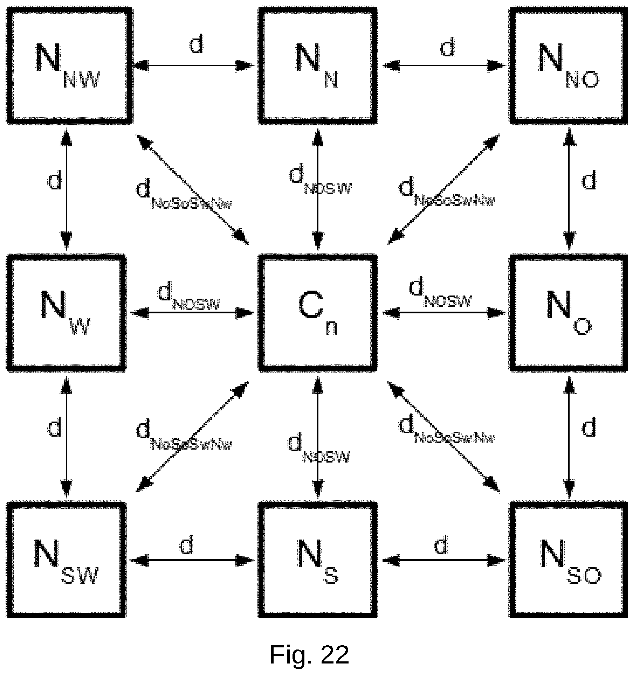

Es wird eine nichtlineare Filterung angewandt. Dabei wird bei einem Kandidaten $C_n$ der Anstieg bezüglich jedem von acht nicht unbedingt angrenzenden Nachbarn berechnet. Die Nachbarn befinden sich dabei bezüglich des Kandidaten direkt in den Richtungen Nord, Ost, Süd, West, Nordost, Südost, Südwest und Nordwest. Die vier Nachbarn Nord, Ost, Süd und West liegen im gleichen Abstand $d_{NOSW}$ zum Kandidaten. Dies ist in Figur 22 dargestellt. Die Nachbarn in den Richtungen Nordost, Südost, Südwest und Nordwest besitzen ebenfalls den gleichen Abstand $d_{NoSoSwNw}$ zum Kandidaten. Wird als Abstand d vorgegeben, so besitzen die Nord-, Ost-, Süd- und West-Nachbarn einen Abstand zum Kandidaten von

$$d_{NOSW} = d:$$

Nordost-, Südost-, Südwest- und Nordwest-Nachbarn haben einen Abstand zum Kandidaten von

$$d_{NoSoSwNw} = \sqrt{2d^2}.$$

Der bisher vorgestellte Ansatz ähnelt dem Monotonie-Operator von Zimmermann und Koris, der in "Eine Familie von Bildmerkmalen für die Bewegungsbestimmung in Bildfolgen"in: Zimmermann, G. ; Kories, R.: Mustererkennung 1984. Bd. 87. Springer-Verlag GmbH, 1984, S. 147-153 beschrieben ist.

Danach wird über ein vielfaches K des Anstiegs der Nachbarn Nord, Ost, Süd und West die Standardabweichung $\sigma_{NOSW}$ berechnet. Anzumerken ist, dass die Sicherheit des Wertes der Standardabweichung unscharf ist, da nur ein sehr kleiner Probenumfang vorliegt. Anschließend wird für das Vielfache K des Anstiegs Nordost, Südost, Südwest und Nordwest die Standardabweichung $\sigma_{NoSoSwNw}$ berechnet. Die Standardabweichungen werden getrennt berechnet, da die entsprechenden Nachbarn unterschiedliche Distanzen zum eigentlichen Kandidaten besitzen ($d_{Nosw} \neq d_{NoSoSwNw}$). Der Koeffizient K ist ein vordefinierter Wert, wobei gilt K > 1.

Da die Berechnung der Standardabweichung ($\sigma_{NOSW}$ und $\sigma_{NoSoSwNw}$) relativ rechenintensiv ist, wird alternativ die maximale absolute Abweichung vom Mittelwert (maxDiff$_{NOSW}$ und maxDiff$_{NoSoSwNw}$) der gegebenen Werte berechnet. Um die Filterung beim Kandidaten Cn abzuschließen, wird vom Wert zw(x, y) an der Position von $C_n$ die Summe ($\sigma_{NOSW} + \sigma_{NoSoSwNw}$ bzw. maxDiff$_{NOSW}$ + maxDiff$_{NoSoSwNw}$ subtrahiert und in eine neue Matrix *sol* geschrieben.

Nachdem die Matrix *sol* mit den Werten von allen Kandidaten gefüllt ist, wird von dem Gesamt-Resultat g(x, y) die Standardabweichung $\sigma_g$ berechnet. Bei allen Kandidaten in der Matrix *sol,* bei denen die Werte größer N * $\sigma_g$ sind, handelt es sich um Blasen 48. N wird hierbei als indirekter Schwellwert vorgegeben, wobei gilt N > 1.

Die Zusammenfassung des Verfahrens 1:

1. Vorauswahl der Kandidaten im Gesamt-Resultat g(x,y) durch das Suchen aller lokalen Maxima in g(x,y), jedes Maxima stellt einen potenziellen Kandidaten dar.

2. Für jeden Kandidaten:

a) Anstieg zu seinen Nachbarn in Distanz $d_{NOSW}$ und $d_{NoSoSwNw}$ berechnen.

b) Die Standardabweichung $\sigma_{NOSW}$ und $\sigma_{NoSoSwNw}$) oder maximale absolute Abweichung vom Mittelwert (maxDiff$_{NOSW}$ und maxDiff$_{NoSoSwNw}$) über die Anstiege getrennt für Nord-Ost-Süd-West und Nordost-Südost-Südwest-Nordwest berechnen.

c) Vom eigentlichen Kandidatenwert in der Matrix zw(x,y) wird die Summe $\sigma_{NOSW} + \sigma_{NoSoSwNw}$ bzw. maxDiff$_{NOSW}$ +maxDiff$_{NoSoSwNw}$ abgezogen und in die Matrix *sol* an die gleiche Position geschrieben.

3. Berechnen der Standardabweichung $\sigma_g$ des Gesamt-Resultates g(x, y).

4. Bei allen Kandidaten in der Matrix *sol* größer N * $\sigma_g$, handelt es sich um Blasen.

Verfahren 2

Die zweite Methode basiert auf der Detektion von kreisähnlichen Objekten 50, dazu werden die Kandidaten anhand des Verhältnisses von Umfang zu Fläche selektiert. Werden entsprechende Kandidaten als kreisähnlich erkannt, handelt es sich um Blasen 48. Dabei wird die Intensität eines Elementes des Gesamt-Resultates als Koordinate für eine dritte Achse (z-Achse) verwendet.

Zu Beginn wird von g(x,y) die Standardabweichung $\sigma_g$ bestimmt. Ein vorgegebenes Vielfaches N von $\sigma_g$ dient als Schwellwert für eine weitere Vorauswahl von Kandidaten. Dabei müssen potenzielle Kandidaten in g(x,y) einen größeren Wert als N * $\sigma_g$ besitzen.

$$K := \{(x,y)|x,y \in \mathbb{N} \land (g(x,y) > N * \sigma_g)\}$$

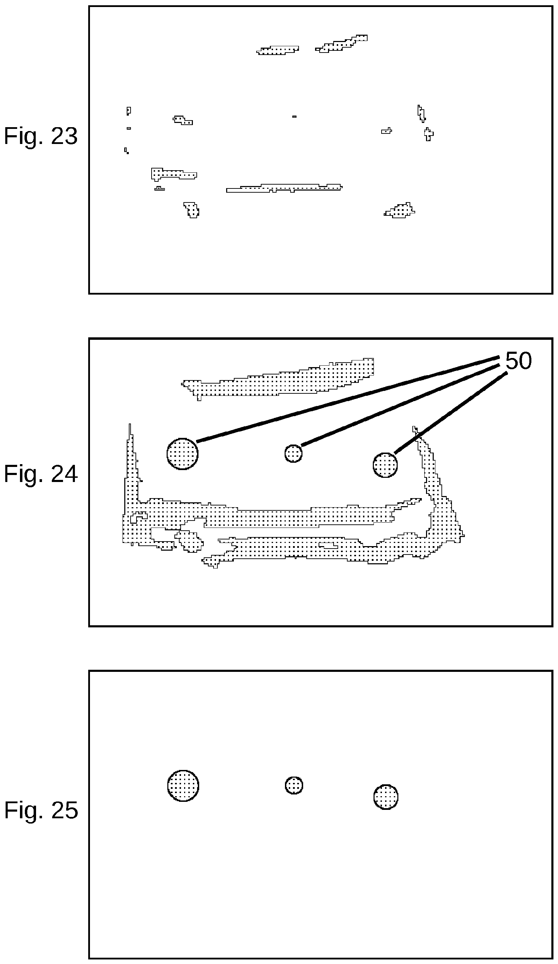

Danach wird das erste Mal in der Schnittebene aus Figur 23 bei $N * \sigma_g$ bei allen vorhandenen Kandidaten der Umfang mit der Fläche verglichen. Dazu wird von jedem vorhandenen Kandidaten der Umfang U und die Fläche A ermittelt. Anhand des Umfangs U wird die Fläche $A_{Kreis}$ eines dem Umfang entsprechenden Kreises auf Basis von Bildpunkten errechnet. Mit einem vorgegebenen Schwellwert $S_{Akzeptanz}$ wird A mit $A_{Kreis}$ verglichen. Ist die absolute Differenz $|A - A_{Kreis}|$ größer als der Schwellwert $S_{Akzeptanz}$, ist der Kandidat ein Falsch-Positiv-Treffer und wird verworfen.

Es gilt:

$$U = 2\pi r$$

$$A = \pi r^2$$

Bei den verbliebenen Kandidaten wird das gleiche Verfahren nochmals bei 1 * $\sigma_g$ durchgeführt. Dies ist in der Schnittebene bei 1 * $\sigma_g$ in Figur 24 zu erkennen. Bei allen verbliebenen Kandidaten, die in Figur 25 zu erkennen sind, handelt es sich um Richtig-Positiv-Treffer, demnach um tatsächlich erkannte Blasen 48.

Die Zusammenfassung dieses Verfahrens:

1. Standardabweichung $\sigma_g$ vom Gesamt-Resultat g(x, y) bestimmen.
2. Es werden nur noch Kandidaten mit Wert in g(x, y) größer $N * \sigma_g$ betrachtet.
3. Für jeden Kandidat größer $N * \sigma_g$:

   a) In der Schnittfläche bei $N * \sigma_g$ wird Umfang U und Fläche A der Kandidaten ermittelt.
   b) Zum Umfang U wird die Fläche $A_{Kreis}$ eines entsprechenden Kreises berechnet.
   c) Differenz $|A - A_{Kreis}|$ berechnet. Ist die Differenz größer des Schwellwertes $S_{Akzeptanz}$, wird der Kandidat verworfen.

4. Für jeden noch vorhandenen Kandidaten:

   a) In der Schnittfläche bei 1 * $\sigma_g$ wird Umfang U und Fläche A der Kandidaten ermittelt.
   b) Zum Umfang U wird die Fläche $A_{Kreis}$ eines entsprechenden Kreises berechnet.
   c) Differenz $|A - A_{Kreis}|$ berechnet. Ist die Differenz größer des Schwellwertes $S_{Akzeptanz}$, wird der Kandidat verworfen.

5. Alle vorhandenen Kandidaten sind Blasen.

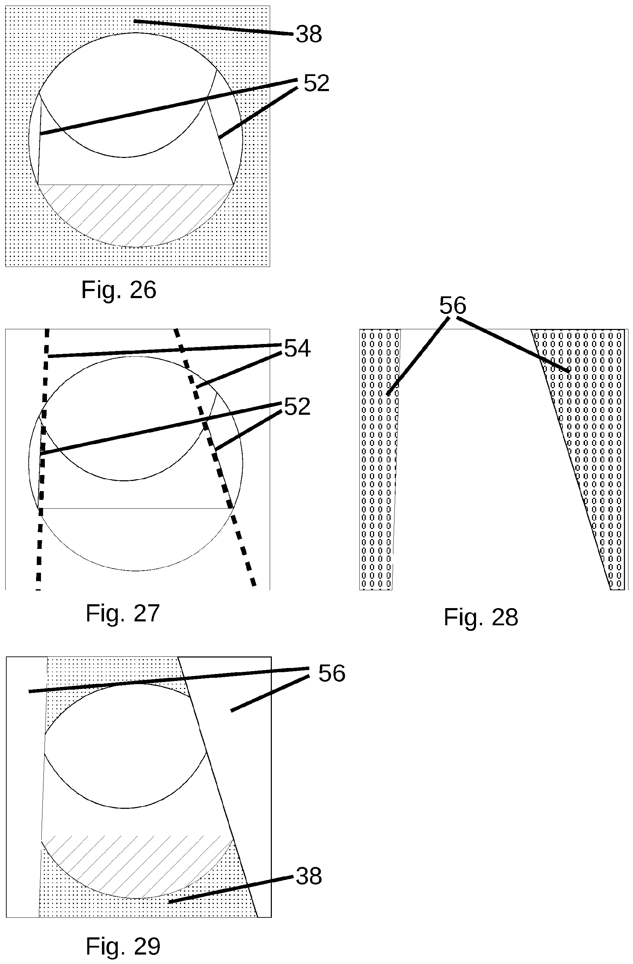

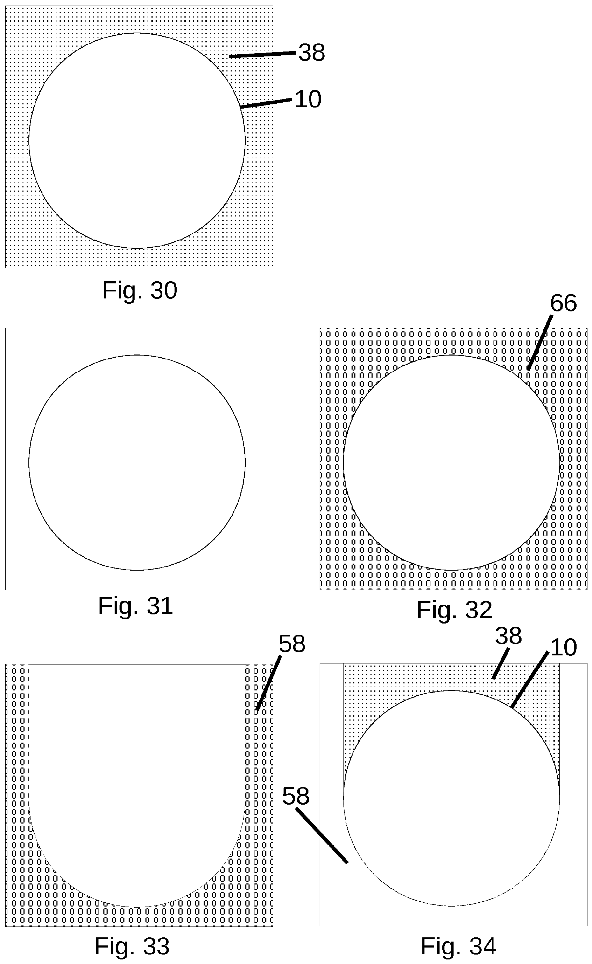

Um die Laufzeit der oben beschriebenen Verfahren zu verbessern, wird eine Maske erstellt, die den Bereich außerhalb des Rohres markiert. Dies ist in Figur 28 und Figur 33 dargestellt. Eine dem aktuellen Bild aus Figur 26 mit Ofen und Plattform überlagerte Maske 56 ist beispielsweise in Figur 29 dargestellt zeigt. Jeder Bildpunkt in dem Bereich wird dabei auf Null gesetzt. Dies ist in Figur 28 und Figur 33 veranschaulicht. Beide Erkennungsverfahren ignorieren dabei diesen Bereich. Dazu muss die Struktur des Graphitrohrs bekannt sein. Es existieren zwei Graphitrohre, zum einen ein Graphitrohr mit Plattform, wie in Figur 26 dargestellt, zum anderen ein Graphitrohr ohne Plattform. Dies ist in Figur 30 dargestellt. Das Graphitrohr mit Plattform hat am linken und rechten Rand der Plattform markante Kanten 52. Zusätzlich befinden sich am linken und rechten Rand des Graphitrohrs 10 relative starke Kontraste durch die direkte Graphitrohrbeleuchtung. Beim Graphitrohr ohne Plattform sind nur Kontraste aufgrund der direkten Graphitrohrbeleuchtung am linken und rechten Rand des Graphitrohrs zu erkennen.

Dementsprechend sollten entsprechende Kanten im Bild detektierbar sein. Um die Maske zu erstellen, wird zu Beginn ein Bild vom leeren und unpipettierten Graphitrohrraum benötigt. Dies ist in Figur 26 dargestellt. Hierbei wird das Original-Farbbild der Kamera verwendet, welches der Kamera-Treiber liefert. Das Farbbild wird mit einem Gauß-Tiefpassfilter geglättet, um Rauschen zu minimieren. Das Farbbild liegt im RGB-Farbraum vor, dabei existieren drei Farbkanäle für Rot, Grün und Blau.

Anschließend wird über das Intensitätsbild des Kanals für die Farbe Grün ($f_B(x, y)$) eine Kantendetektion mit Hilfe des Sobel-Operators durchgeführt. Dabei wird das Intensitätsbild mit dem Sobel-Operator $h_X(x,y)$ und $h_Y(x,y)$ gefiltert

$$i(x,y) \;=\; f_B(x,y) \;\otimes\; h_X(x,y)$$

$$j(x,y) \;=\; f_B(x,y) \;\otimes\; h_Y(x,y)$$

$$f'(x,y) = \sqrt{i^2(x,y) \;+\; j^2(x,y)}$$

und daraufhin mit einem vorgegebenen Schwellwert $S_{BW}$ in ein Binärbild konvertiert. Auf Basis des Binärbildes wird eine Hough-Transformation für Geraden angewandt. Das Ergebnis ist eine Ansammlung von den Kanten 52 zugeordneten Geraden 54 (Figur 27), wobei die Geraden in Parameterform vorliegen. Dieser ganze Ablauf wird ebenfalls mit dem blauen Farbkanal durchgeführt, was ebenso zu gefundenen Geraden im Bild führt. Das Farbbild des Graphitrohres enthält wertvolle Informationen hauptsächlich im grünen und blauen Farbkanal. Aus diesem Grund wird der rote Farbkanal ignoriert.

Anschließend werden die gefundenen Geraden miteinander verglichen und uninteressante Geraden aussortiert. Dies geschieht auf Basis des Wissens, welches über die Geometrie des Graphitrohrs existiert. Im Endeffekt werden die Kanten beibehalten, welche den linken und rechten Rand des Graphitrohrs markieren. Der Bereich außerhalb der gefunden Kanten definiert die Maske 56. Dies entspricht dem Bereich außerhalb des Graphitrohrs, der in Figur 28 zu erkennen ist. In Figur 29 sind uninteressante Bereiche des Graphitrohrs Figur 26 durch Überlagerung mit der erzeugten Maske 56 Figur 28 ausgeblendet. Dies funktioniert zuverlässig beim Graphitrohr mit Plattform. Beim Graphitrohr ohne Plattform führt dieses Vorgehen nicht zum Ziel, da die markanten Kanten der Plattform nicht vorhanden sind. Die Maske würde anhand von fehlerhafter Geradendetektion Teile des Sichtbereiches vom Graphitrohr überdecken. Dadurch ist es indirekt möglich den Graphitrohrtyp zu identifizieren und festzustellen, ob eine Plattform vorliegt oder nicht. Daraus ergeben sich neue Anwendungsmöglichkeiten des hier vorgestellten Verfahrens.

Da die erzeugte Maske beim Graphitrohr ohne Plattform nicht verwendbar ist, wird die Maske auf eine andere Weise erstellt. Dabei wird auf alle drei Farbkanäle des ursprünglichen Graphitrohrbildes aus Figur 30 die Kantendetektion mit Hilfe des Sobel-Operators durchgeführt. Anschließend wird auf Basis der drei Kantenbilder aus Figur 31 jeweils die konvexe Hülle erzeugt. Die konvexen Hüllen aller drei Kanäle werden danach überlagert und bilden dabei die neue, vorläufige Maske 66. Dies ist in Figur 32 dargestellt. Die Gesamtmenge aller konvexen Hüllen und der Bereich oberhalb der Gesamtmenge ergibt die neue Maske 58. Dies ist in Figur 33 dargestellt. In Figur 34 sind uninteressante Bereiche des Graphitrohrs aus Figur 30 durch Überlagerung mit der erzeugten Maske 58 aus Figur 33 ausgeblendet.

## Patentansprüche

1. Verfahren zur spektralen Analyse von Proben in einem Graphitrohr mit den Schritten:

   a) Einbringen einer flüssigen Probe (32) in ein Graphitrohr (10);
   b) Trocknen der Probe durch Erhitzen des Graphitrohrs;
   c) Überführen der Probe in eine Teilchenwolke durch weiteres Erhitzen des Graphitrohrs; und
   d) Messen eines von der Probe beeinflussten oder erzeugten optischen Signals mit einem Detektor; wobei
   e) Bildfolgen des Innenraums des Graphitrohrs über ausgewählte Zeiträume während der spektralen Analyse mit einer Kamera (22) mit einer Vielzahl von Bildelementen aufgenommen werden, wobei die Kamera unter einem Winkel angeordnet ist, so dass der Strahlengang (20) der Kamera den Strahlengang (18) zum Detektor nicht beeinflusst;
   f) die Bilder (62) der Bildfolgen mit bildverarbeitenden Mitteln automatisiert verarbeitet werden,

g) wobei ein Referenzbild des Innenraums des Graphitrohrs ermittelt wird;

h) der Zustand der Probe durch Vergleich der Bilder der Bildfolgen mit dem Referenzbild ermittelt wird, und

i) wobei die Temperatur des Graphitrohrs in Abhängigkeit des Zustands oder in Abhängigkeit von Parametern, welche den Zustand beschreiben, geregelt wird.

2. Verfahren nach Anspruch 1, wobei ein nächstfolgender Schritt der spektralen Analyse ausgelöst wird, wenn ein ausgewählter Soll-Zustand der Probe erreicht wird.

3. Verfahren nach Anspruch 1 oder 2, wobei die Bilder der Bildfolgen nur für einen für alle Bilder der Bildfolge gleichen Teilbereich (38) verarbeitet werden.

4. Verfahren nach Anspruch 3, mit den folgenden Schritten:

a) Filtern eines Intensitätsbilds f(x,y) der mit der Kamera aufgenommenen Bilder mit Ursprungsabmaßen durch Faltung mit einem Sobel-Operator, $h_x$ (x,y) und $h_y$ (x,y), wobei

$$i(x, y) = f(x, y) \otimes h_x (x, y)$$

$$j(x, y) = f(x, y) \otimes h_y (x, y)$$

$$f'(x, y) = \sqrt{i^2 (x,y) + j^2(x,y)}$$

mit x, y: Koordinaten der Bildpunkte

b) Überführen des Resultats f'(x,y) der Filterung in ein Binärbild b(x,y) mit Schwellwert n entsprechend der Regel:

$$b(x,y) = \begin{cases} 0, \text{falls } f'(x,y) < n \\ 1, \text{falls } f'(x,y) \geq n \end{cases}$$

c) Ermitteln der Position der Elemente mit Wert 1 im Binärbild b(x, y);

d) Abgrenzen des Teilbereichs unter Berücksichtigung dieser Positionen xmin, xmax, ymin, ymax, wobei

$X \subseteq \mathbb{N}$ (*Menge der Bildelemente in X - Dimension*)
$Y \subseteq \mathbb{N}$ (*Menge der Bildelemente in Y - Dimension*)
$S^2 \subseteq X \times Y$ (*interessanter Teilbereich des Bildes*)
$(x,y) \in X \times Y$
$x_{min}, x_{max} \in X$
$y_{min}, y_{max} \in Y$

$$u(x, y)$$
$$= \begin{cases} 1, & falls \quad \exists x'(x' \in X \wedge b(x',y) = 1) \wedge \exists y'(y' \in Y \wedge b(x,y') = 1) \\ 0, & sonst \end{cases}$$

$$[x_{min}, x_{max}] \times [y_{min}, y_{max}] :=$$

$$\{(x', y') \in S^2 | (x_{min} \leq x' \leq x_{max}, y_{min} \leq y' \leq y_{max}) \wedge u(x', y') = 1\}$$

5. Verfahren nach einem der vorgehenden Ansprüche, wobei die Lage des Graphitrohrs (10) oder die Lage von Teilen des Graphitrohrs oder die Lage einer im Graphitrohr angeordneten Plattform (26) mit den bildverarbeitenden Mitteln automatisiert ermittelt wird.

6.  Verfahren nach Anspruch 5, wobei die Lage des Graphitrohrs oder die Lage von Teilen des Graphitrohrs oder die Lage einer im Graphitrohr angeordneten Plattform mit folgenden Schritten ermittelt wird:

    a) Filtern eines Intensitätsbilds f(x,y) der mit der Kamera aufgenommenen Bilder des leeren Graphitrohrs mit einem Hochpassfilter oder Konvertieren des Intensitätsbilds f(x,y) in eine Darstellung mit Orts- und Frequenzauflösung zu einem gefilterten Bild g(x, y), wobei in einer Darstellung mit Orts- und Frequenzauflösung unter einer Ortsangabe in Form von Koordinaten die in diesem Bereich vorhandenen Frequenzinformationen ermittelt werden,
    b) Ermitteln des höchsten Werts in jeder Spalte von g(x,y) und Einfügen der entsprechenden Position in einen Vektor, so dass der Vektor ein Modell repräsentiert, in dem der Vektor so viele Elemente besitzt, wie die Darstellung g(x, y) Spalten hat;
    c) Durchführen einer iterativen Ausreißereliminierung nach dem 3-Sigma-Kriterium und Anpassen eines Polynoms an das Modell; wobei

$$P\{|M - E(M)| < 3\sigma\} = 0,9973$$

$$P\{E(M) - 3\sigma < M < E(M) + 3\sigma\} = 0,9973$$

    d) Bestimmen der gesuchten Lage des Graphitrohrs, der Teile des Graphitrohrs oder der im Graphitrohr angeordneten Plattform

$$X \subseteq \mathbb{N}$$
$$Y \subseteq \mathbb{N}$$
$$P \subseteq \mathbb{R}$$
*g:X × Y → P*
*maxPos: X → Y*
*maxPos(x) := {y ∈ Y|∀r ∈ P:r ≤ g(x,y)}*
*TcX*
*U = X\T*

$$T = [x_{min}, x_{max}] := \{x \in X | (x_{min} \leq x \leq x_{max}) \wedge$$
$$\exists a \in U := ((a < x_{min} \vee a > x_{max}) \wedge maxPos(a) = 0)\}$$

$$M = \begin{bmatrix} maxPos(x_{min}) \\ maxPos(x_{min} + 1) \\ \vdots \\ maxPos(x_{max} - 1) \\ maxPos(x_{max}) \end{bmatrix}$$

7.  Verfahren nach Anspruch 5 oder 6, wobei der Pipettierabstand (64) eines Dosiermittels zum Einführen der Probe in das Graphitrohr mit den bildverarbeitenden Mitteln automatisiert ermittelt wird.

8.  Verfahren nach Anspruch 7, wobei die Ermittlung durch folgende Schritte erfolgt:

    a) Erkennen einer Pipette (30) des Dosiermittels und ihrer Position im Bild anhand der Differenzbildanalyse gegenüber dem Referenzbild durch Bildung der Differenz zwischen dem Bild und dem Referenzbild; Pipettenposition im Intervall pipXmin.. pipXmax und pipYmin.. pipYmax
    b) Ermitteln der Position und/oder relativen Höhe zum Bildrand des Bodens der Plattform oder des Graphitrohrs unterhalb der Pipette über eine Bodendetektion der Plattform oder des Graphitrohrs; über ein Polynom *bottom(x)* und der Position des Bodens der Plattform oder des Graphitrohrs *Position Y$_{Boden}$* mit kürzester Distanz zur Pipette

$$PositionY_{Boden}(begin, end) = \min_{x=begin}^{end}(bottom(x))$$

c) Errechnen des Pipettierabstandes anhand der Pipettenposition im Bild und der Bodenposition der Plattform oder des Graphitrohrs, wobei

$$Abstand = |PositionY_{Boden}(pipX_{min}, pipX_{\max}) - pipY_{max}|$$

9. Verfahren nach einem der vorgehenden Ansprüche, wobei das Erreichen der vollständigen Trocknung der Probe mit den bildverarbeitenden Mitteln automatisiert ermittelt wird.

10. Verfahren nach Anspruch 9, wobei das Erreichen der vollständigen Trocknung ermittelt wird, mit den Schritten:

a) Ermitteln einer Funktion, vorzugsweise eines Polynoms, im Referenzbild mittels Bodendetektion, wobei die Funktion den Verlauf des höchsten Kontrasts im Bild mit horizontaler Ausrichtung beschreibt,
b) Für jedes aktuelle Bild Ermitteln einer Funktion, vorzugsweise eines Polynoms, im aktuellen Bild mittels Bodendetektion;
c) Vergleichen beider Funktionen mittels euklidischer Distanz der Koeffizienten des Polynoms und Bestimmen des Bildes, bei dem die Distanz kleiner ist als ein Schwellwert.

11. Verfahren nach Anspruch 9, wobei
das Erreichen der vollständigen Trocknung ermittelt wird, mit den Schritten:

a) Bilden der Differenz $g(x, y)$ aus dem jeweils aktuellem Bild $f(x, y)$ und dem Referenzbild $h(x, y)$;
b) Entfernen von Rauschen in $g(x, y)$ durch Vergleich mit einem Schwellwert;
c) Bestimmen des Bildes, bei dem der so bestimmte, Rauschen-korrigierte Wert kleiner ist als ein Schwellwert.

12. Verfahren nach einem der vorgehenden Ansprüche, wobei
das Vorhandensein und/oder die Lage von Blasen (48) während der Trocknung der Probe (32) mit den bildverarbeitenden Mitteln automatisiert ermittelt wird.

13. Verfahren nach Anspruch 12, wobei
die Ermittlung mit folgenden Schritten erfolgt:

a) Filtern des aktuellen Bilds $f(x,y)$ im Frequenzraum mittels der Methode Difference of Gaussian, wobei ein Filter-Resultat $g_n(x,y)$ erhalten wird, wobei ein Gesamt-Resultat $g(x,y) = \max_n g_n(x, y)$ gebildet wird;
b) Vorauswahl der Kandidaten möglicher Blasen repräsentiert durch Positionen $(x,y)$ in dem Gesamtresultat $g(x, y)$ durch Verwerfen von allem, was unterhalb der einfachen Standardabweichung von $g(x,y)$ liegt, wodurch die Matrix $z_W(x, y)$ entsteht;
c) Suchen aller lokalen Maxima in der Matrix $z_W(x, y)$, wobei jedes Maximum einen potenziellen Kandidaten darstellt;
d) Für jeden Kandidaten:

i. Berechnen des Anstiegs der Intensität zu seinen acht Nachbarn, wobei die vier Nachbarn Nord, Ost, Süd und West im Abstand $d_{NOSW}=d$ zum Kandidaten liegen und die vier Nachbarn Nordost, Südost, Südwest und Nordwest den Abstand $d_{NoSoSwNw} = \sqrt{2d^2}$ zum Kandidaten besitzen;
ii. Berechnen der Standardabweichung $\sigma_{NOSW}$ und $\sigma_{NoSoSwNw}$ oder der maximalen absoluten Abweichung vom Mittelwert $maxDiff_{NOSW}$ und $maxDiff_{NoSoSwNw}$ über die Anstiege der Intensität getrennt für Nord-Ost-Süd-West und Nordost-Südost-Südwest-Nordwest;
iii. Bilden der Differenz vom Wert $z_W(x, y)$ an der Position des Kandidaten und der Summe $\sigma_{NOSW} + \sigma_{NoSoSwNw}$ bzw. $maxDiff_{NOSW} + maxDiff_{NoSoSwNw}$, wobei anschließend die Differenz in eine neue Matrix sol an die gleiche Position $(x,y)$ geschrieben wird;

e) Berechnen der Standardabweichung $\sigma_g$ des Gesamt-Resultates g(x, y);
f) Definieren aller Kandidaten in der Matrix *sol* größer N $^*$ $\sigma_g$ als Blasen, wobei gilt N > 1.

**14.** Verfahren nach Anspruch 12, wobei
die Ermittlung mit folgenden Schritten erfolgt:

a) Filtern des aktuellen Bilds f(x,y) im Frequenzraum mittels der Methode Difference of Gaussian, wobei ein
Filter-Resultat $g_n$(x,y) erhalten wird, wobei ein Gesamt-Resultat $g(x,y) = \max_n g_n(x,y)$ gebildet wird;
b) Bestimmen der Standardabweichung $\sigma_g$ von dem Gesamt-Resultat g(x, y);
c) Verwerfen aller Werte außer der Kandidaten mit Wert in g(x, y) größer N $^*$ $\sigma_g$
d) für jeden Kandidat mit einem Wert größer N $^*$ $\sigma_g$

i. Ermitteln des Umfangs U in der Schnittfläche bei N $^*$ $\sigma_g$ und der Fläche A der Kandidaten;
ii. Berechnen der Fläche $A_{Kreis}$ eines dem Umfang entsprechenden Kreises;
iii. Berechnen der Differenz |A - $A_{Kreis}$| und Verwerfen aller Kandidaten, bei denen die Differenz größer ist
als der Schwellwert $S_{Akzeptanz}$;

e) für jeden noch vorhandenen Kandidaten:

i. Ermitteln des Umfangs U in der Schnittfläche bei 1 $^*$ $\sigma_g$ und der Fläche A der Kandidaten;
ii. Berechnen der Fläche $A_{Kreis}$ eines dem Umfang U entsprechenden Kreises;
iii. Berechnen der Differenz |A - $A_{Kreis}$| und Verwerfen aller Kandidaten, bei denen die Differenz größer ist
als der Schwellwert $S_{Akzeptanz}$;

f) Definieren aller noch vorhandenen Kandidaten als Blasen.

**15.** Verfahren nach einem der vorgehenden Ansprüche, wobei
anhand des mit den bildverarbeitenden Mitteln erfassten Zustands optimierte Werte und Parameter für den Analysevorgang zur weiteren Anwendung erstellt werden.

**16.** Verfahren nach einem der vorgehenden Ansprüche, wobei
eine Maske (56) zum Ausblenden uninteressanter Bereiche aus den Bildern generiert wird.

**17.** Verfahren nach einem der vorgehenden Ansprüche, wobei
ermittelt wird, welcher Graphitrohrtyp vorliegt.

**Claims**

**1.** Procedure for the spectral analysis of samples in a graphite tube, wherein said procedure comprises the following
steps:

a) Introduction of a liquid sample (32) in a graphite tube (10);
b) Drying of the sample by heating the graphite tube;
c) Transformation of the sample into a particle cloud by further heating the graphite tube; and
d) Measurement of an optical signal influenced or generated by the sample using a detector;
wherein
e) Sequences of images of the interior of the graphite tube are taken over selected periods during the spectral
analysis with a camera (22) with multiple image elements, wherein the camera is arranged at such an angle
that the beam path (20) of the camera does not affect the beam path (18) towards the detector;
f) The images of the sequences of images are processed automatically with image-processing resources,
g) Wherein a reference image of the interior of the graphite tube is determined;
h) The state of the sample is determined by comparing the images of the sequences of images with the reference
image, and
i) Wherein the temperature of the graphite tube is regulated depending on the state or depending on the parameters that describe the state.

2. Procedure as claimed in Claim 1, wherein a subsequent step of the spectral analysis is triggered when a selected target state of the sample is reached.

3. Procedure as claimed in Claim 1 or 2, wherein the images of the sequences of images are only processed for a subsection (38) that is identical for all the images of the image sequence.

4. Procedure as claimed in Claim 3, wherein said procedure comprises the following steps:

a) Filtering of an intensity image f(x,y) of the images taken by the camera with original dimensions by folding with a Sobel operator, $h_x$ (x,y) and $h_y$ (x,y), where

$$i(x, y) = f(x, y) \otimes h_x (x, y)$$

$$j(x, y) = f(x, y) \otimes h_y (x, y)$$

$$f'(x, y) = \sqrt{i^2 (x,y) + j^2(x,y)}$$

with x, y: coordinates of the image points
b) Transfer of the result f'(x,y) of the filtering to a binary image b(x,y) with a threshold value n according to the rule:

$$b(x,y) = \begin{cases} 0, \text{ if } f'(x,y) < n \\ 1, \text{ if } f'(x,y) \geq n \end{cases}$$

c) Determination of the position of the elements with the value 1 in the binary image b(x, y);
d) Delimitation of the subsection taking into account these positions xmin, xmax, ymin, ymax, wherein

$X \subseteq N$ (amount of image elements in the dimension X)
$Y \subseteq N$ (amount of image elements in the dimension Y)
$S^2 \subseteq X * Y$ (interesting subsection of the image)
$(x, y) \in X * Y$

$$u (x,y) = \begin{cases} 1, & if & \exists x'(x' \in X \wedge b(x',y) = 1) \wedge \exists y'(y' \in Y \wedge b(x,y') = 1) \\ 0, & otherwise \end{cases}$$

$$[X_{min}, X_{max}] * [Y_{min}, Y_{max}] :=$$
$$\{(x', y') \in S^2 | (X_{min} \leq x' \leq X_{max}, y_{min} \leq y' \leq y_{max}) \wedge u (x', y') = 1\}$$

5. Procedure as claimed in one of the previous claims, wherein the position of the graphite tube (10) or the position of parts of the graphite tube or the position of a platform (26) arranged in the graphite tube is determined automatically with the image-processing resources.

6. Procedure as claimed in Claim 5, wherein the position of the graphite tube or the position of parts of the graphite tube or the position of a platform arranged in the graphite tube is determined by the following steps:

a) Filtering of an intensity image f(x,y) of the images of the empty graphite tube taken by the camera with a high-pass filter or conversion of the intensity image f(x,y) to a visualization with a spatial and frequency resolution to a filtered image g(x,y), wherein, in a visualization, the spatial and frequency resolution with the location indicated in the form of coordinates is used to determine the frequency information present in this area,
b) Determination of the highest value in every column of g(x,y) and insertion of the corresponding position in a vector, such that the vector represents a model in which the vector has the same number of elements as the visualization g(x,y) has columns;

c) Performance of the iterative elimination of outliers according to the 3 sigma criterion and adaptation of a polynomial to the model; wherein

$$P\{|M - E(M)| < 3\sigma\} = 0,9973$$

$$P\{E(M) - 3\sigma < M < E(M) + 3\sigma\} = 0,9973$$

d) Determination of the sought position of the graphite tube, of parts of the graphite tube or of the platform arranged in the graphite tube

$X \subseteq N$
$Y \subseteq N$
$P \subseteq R$
$g: X * Y \to P$
$maxPos: X \to Y$
$maxPos(x) := \{y \in Y | \forall r \in P: r \le g(x,y)\}$
$T \subset X$
$U = X \backslash T$

$$T = [x_{min}, x_{max}] := \{x \in X | (x_{min} \le x \le x_{max}) \wedge$$

$$\exists a \in U := \big((a < x_{min} \vee a > x_{max}) \wedge maxPos(a) = 0\big)\}$$

$$M = \begin{bmatrix} maxPos(x_{min}) \\ maxPos(x_{min} + 1) \\ \vdots \\ maxPos(x_{max} - 1) \\ maxPos(x_{max}) \end{bmatrix}$$

7. Procedure as claimed in Claim 5 or 6, wherein the pipetting distance (64) of a dosing unit to introduce the sample into the graphite tube is determined automatically with the image-processing resources.

8. Procedure as claimed in Claim 7, wherein the determination is performed by the following steps:

a) Detection of a pipette (30) of the dosing unit and its position in the image using the differential image analysis in relation to the reference image by forming the difference between the image and the reference image; Pipette position in the interval pipXmin.. pipXmax and pipYmin.. pipYmax

b) Determination of the position and/or the relative height in relation to the image edge of the bottom of the platform or of the graphite tube below the pipette via a bottom detection of the platform or the graphite tube; via a polynomial *bottom(x)* and the position of the bottom of the platform or the graphite tube *Position Y_{Boden}* with the shortest distance to the pipette

$$PositionY_{Boden}(begin, end) = \min_{x=begin}^{end} \big(bottom(x)\big)$$

c) Calculation of the pipetting distance using the pipette position in the image and the bottom position of the platform or the graphite tube, wherein

$$Distance = |PositionY_{Boden}(pipX_{min}, pipX_{max}) - pipY_{max}|$$

9. Procedure as claimed in one of the previous claims, wherein the reaching of the point when the sample is fully dried is determined automatically by the image-processing means.

10. Procedure as claimed in Claim 9, wherein the reaching of fully dry state is determined with the following steps:

a) Determination of a function, preferably a polynomial, in the reference image using bottom detection, wherein the function describes the evolution of the highest contrast in the image with a horizontal orientation,
b) For each current image, determination of a function, preferably a polynomial, in the current image by means of bottom detection;
c) Comparison of both functions using the Euclidean distance of the coefficients of the polynomial and determination of the image in which the distance is smaller than a threshold value.

11. Procedure as claimed in Claim 9, wherein the reaching of fully dry state is determined with the following steps:

a) Formation of the difference g(x, y) between the current image f(x, y) and the reference image h(x, y);
b) Elimination of noise in g(x, y) by comparing with a threshold value;
c) Determination of the image in which the noise-corrected value determined in this way is less than a threshold value.

12. Procedure as claimed in one of the previous claims, wherein the presence and/or the position of bubbles (48) is determined automatically during the drying of the sample (32) with the image-processing resources.

13. Procedure as claimed in Claim 12, wherein the determination process comprises the following steps:

a) Filtering of the current image f(x,y) in the frequency space using the Difference of Gaussian method, wherein a filter result $g_n(x,y)$ is obtained, wherein an overall result $g(x,y) = \max_n g_n(x, y)$ is formed;
b) Preselection of the candidates of possible bubbles represented by positions (x,y) in the overall result g(x,y) by rejecting everything that is below the simple standard deviation of g(x,y), producing the matrix zw(x,y);
c) Search for all the local maxima in the matrix zw(x, y), wherein each maximum represents a potential candidate;
d) For each candidate:

i. Calculation of the increase in intensity in relation to its eight neighbors, wherein the four neighbors north, east, south and west are at a distance $d_{NOSW}=d$ to the candidate and the four neighbors north-east, south-east, south-west and north-west have a distance $d_{NoSoSwNw} = \sqrt{2d^2}$ from the candidate;
ii. Calculation of the standard deviation $\sigma_{NOSW}$ and $\sigma_{NoSoSwNw}$ or the maximum absolute deviation in relation to the mean $maxDiff_{NOSW}$ and $maxDiff_{NoSoSwNw}$ via the increases in intensity separately for the north-east/south-west and the north-east/south-east/south-west/north-west;
iii. Calculation of the difference between the value zw(x, y) at the position of the candidate and the sum $\sigma_{NOSW} + \sigma_{NoSoSwNw}$ or $maxDiff_{NOSW} + maxDiffNososwNw$, wherein the difference is subsequently written to a new matrix *sol* at the same position (x,y);

e) Calculation of the standard deviation $\sigma_g$ of the overall result g(x, y);
f) Definition of all candidates in the matrix *sol* greater than $N * \sigma_g$ as bubbles, with N > 1.

14. Procedure as claimed in Claim 12, wherein the determination is performed via the following steps:

a) Filtering of the current image f(x,y) in the frequency space using the Difference of Gaussian method, wherein a filter result $g_n(x,y)$ is obtained, wherein an overall result $g(x,y) = \max_n g_n(x, y)$ is formed;
b) Determination of the standard deviation $\sigma_g$ from the overall result g(x, y);
c) Rejection of all values except for candidates with a value in g(x, y) greater than $N * \sigma g$
d) For each candidate with a value greater than $N * \sigma_g$

i. Determination of the circumference U in the section at N * $\sigma_g$ and the area A of the candidates;
ii. Calculation of the area $A_{Kreis}$ of a circle corresponding to the circumference;
iii. Calculation of the difference $|A - A_{Kreis}|$ and rejection of all the candidates where the difference is greater than the threshold value $S_{Akzeptanz}$;

e) For each candidate still remaining:

i. Determination of the circumference U in the section at 1 * $\sigma_g$ and the area A of the candidate;
ii. Calculation of the area $A_{Kreis}$ of a circle corresponding to the circumference U;
iii. Calculation of the difference $|A - A_{Kreis}|$ and rejection of all the candidates where the difference is greater than the threshold value $S_{Akzeptanz}$;

f) Definition of all the remaining candidates as bubbles.

15. Procedure as claimed in one of the previous claims, wherein, using the state recorded by the image-processing resources, optimized values and parameters are produced for the analysis process for further application.

16. Procedure as claimed in one of the previous claims, wherein a mask (56) is generated to mask out uninteresting areas of the images.

17. Procedure as claimed in one of the previous claims, wherein the type of graphite tube that is present is determined.

**Revendications**

1. Procédé destiné à l'analyse spectrale d'échantillons dans un tube en graphite, lequel procédé comprend les étapes suivantes :

a) Introduction d'un échantillon liquide (32) dans un tube en graphite (10) ;
b) Séchage de l'échantillon par chauffage du tube en graphite ;
c) Transformation de l'échantillon en un nuage de particules par chauffage supplémentaire du tube en graphite ; et
d) Mesure d'un signal optique influencé ou généré par l'échantillon à l'aide d'un détecteur ;
procédé au cours duquel
e) des séquences d'images de l'intérieur du tube en graphite sont prises pendant des périodes sélectionnées au cours de l'analyse spectrale avec une caméra (22) comportant une pluralité d'éléments d'image, la caméra étant disposée selon un angle tel que le trajet optique (20) de la caméra n'influence pas le trajet optique (18) vers le détecteur ;
f) les images des séquences d'images sont traitées de manière automatisée par des moyens de traitement d'images,
g) une image de référence de l'intérieur du tube en graphite est déterminée ;
h) l'état de l'échantillon est déterminé par comparaison des images des séquences d'images avec l'image de référence, et
i) la température du tube en graphite est réglée en fonction de l'état ou en fonction de paramètres qui décrivent l'état.

2. Procédé selon la revendication 1, pour lequel une étape suivante de l'analyse spectrale est déclenchée lorsqu'un état cible sélectionné de l'échantillon est atteint.

3. Procédé selon la revendication 1 ou 2, pour lequel les images des séquences d'images ne sont traitées que pour une zone partielle (38) identique pour toutes les images de la séquence d'images.

4. Procédé selon la revendication 3, lequel procédé comprend les étapes suivantes :

a) Filtrage d'une image d'intensité f(x,y) des images prises avec la caméra ayant des dimensions d'origine par convolution avec un opérateur de Sobel, $h_x$ (x,y) et $h_y$ (x,y), où

$$i(x, y) = f(x, y) \otimes h_x(x, y)$$

$$j(x, y) = f(x, y) \otimes h_y(x, y)$$

$$f'(x, y) = \sqrt{i^2(x, y) + j^2(x, y)}$$

avec x, y : coordonnées des points de l'image

b) Transformation du résultat f'(x,y) du filtrage en une image binaire b(x,y) avec une valeur seuil n selon la règle :

$$b(x,y) = \begin{cases} 0, \text{ si } f'(x,y) < n \\ 1, \text{ si } f'(x,y) \geq n \end{cases}$$

c) Détermination de la position des éléments de valeur 1 dans l'image binaire b(x, y) ;

d) Délimitation de la sous-zone en tenant compte de ces positions xmin, xmax, ymin, ymax, où

$X \subseteq N$ (ensemble des éléments d'image dans la dimension X)
$Y \subseteq N$ (ensemble des éléments d'image dans la dimension Y)
$S^2 \subseteq X * Y$ (zone intéressante de l'image)
$(x, y) \in X * Y$

$$u(x,y) = \begin{cases} 1, & si & \exists x'(x' \in X \wedge b(x',y) = 1) \wedge \exists y'(y' \in Y \wedge b(x,y') = 1) \\ 0, & sinon \end{cases}$$

$$[X_{min}, X_{max}] * [Y_{min}, Y_{max}] :=$$
$$\{(x', y') \in S^2 | (x_{min} \leq x' \leq x_{max}, y_{min} \leq y' \leq y_{max}) \wedge u(x', y') = 1\}$$

**5.** Procédé selon l'une des revendications précédentes, pour lequel la position du tube en graphite (10) ou la position de parties du tube en graphite ou la position d'une plateforme (26) disposée dans le tube en graphite est déterminée de manière automatisée avec les moyens de traitement d'images.

**6.** Procédé selon la revendication 5, pour lequel la position du tube en graphite ou la position de parties du tube en graphite ou la position d'une plateforme disposée dans le tube en graphite est déterminée par les étapes suivantes :

a) Filtrage d'une image d'intensité f(x,y) des images du tube de graphite vide prises par la caméra avec un filtre passe-haut ou conversion de l'image d'intensité f(x,y) en une représentation avec résolution spatiale et fréquentielle en une image filtrée g(x,y), les informations de fréquence présentes dans cette zone étant déterminées dans une représentation avec résolution spatiale et fréquentielle sous une indication de lieu sous forme de coordonnées,

b) Détermination de la valeur la plus élevée dans chaque colonne de g(x,y) et insertion de la position correspondante dans un vecteur, de sorte que le vecteur représente un modèle dans lequel le vecteur a autant d'éléments que la représentation g(x,y) a de colonnes ;

c) Réalisation d'une élimination itérative des valeurs aberrantes selon le critère des 3 sigma et adaptation d'un polynôme au modèle ; où

$$P\{|M - E(M)| < 3\sigma\} = 0{,}9973$$

$$P\{E(M) - 3\sigma < M < E(M) + 3\sigma\} = 0{,}9973$$

d) Détermination de la position recherchée du tube en graphite, des parties du tube en graphite ou de la plateforme disposée dans le tube en graphite

$X \subseteq N$
$Y \subseteq N$
$P \subseteq R$
$g : X * Y \rightarrow P$
$maxPos : X \rightarrow Y$
$maxPos(x) := \{ye\ Y | \forall \acute{r}\in P : \acute{r} \leq g(x,y)\}$
$T \subset X$
$U = X \backslash T$

$$T = [x_{min}, x_{max}] := \{x \in X | (x_{min} \leq x \leq x_{max})\ \wedge$$
$$\exists a \in U := ((a < x_{min} \vee a > x_{max}) \wedge maxPos(a) = 0)\}$$

$$M = \begin{bmatrix} maxPos(x_{min}) \\ maxPos(x_{min} + 1) \\ \vdots \\ maxPos(x_{max} - 1) \\ maxPos(x_{max}) \end{bmatrix}$$

**7.** Procédé selon la revendication 5 ou 6, pour lequel la distance de pipetage (64) d'un moyen de dosage pour l'introduction de l'échantillon dans le tube en graphite est déterminée de manière automatisée avec les moyens de traitement d'images.

**8.** Procédé selon la revendication 7, pour lequel la détermination est effectuée par les étapes suivantes :

a) Reconnaissance d'une pipette (30) du produit de dosage et de sa position dans l'image à l'aide de l'analyse d'image différentielle par rapport à l'image de référence en formant la différence entre l'image et l'image de référence ; Position de la pipette dans l'intervalle pipXmin.. pipXmax et pipYmin.. pipYmax
b) Détermination de la position et/ou de la hauteur relative par rapport au bord de l'image du fond de la plateforme ou du tube en graphite en dessous de la pipette par une détection du fond de la plateforme ou du tube en graphite ; par un polynôme *bottom(x)* et la position du fond de la plateforme ou du tube en graphite *Position Y$_{Boden}$* avec la distance la plus courte à la pipette

$$PositionY_{Boden}(begin, end) = \min_{x=begin}^{end} (bottom(x))$$

c) Calcul de la distance de pipetage à partir de la position de la pipette dans l'image et de la position du fond de la plateforme ou du tube en graphite, où

$$Distance = |PositionY_{Boden}(pipX_{min}, pipX_{max}) - pipY_{max}|$$

**9.** Procédé selon l'une des revendications précédentes, pour lequel l'obtention du séchage complet de l'échantillon est déterminée de manière automatisée par les moyens de traitement d'image.

**10.** Procédé selon la revendication 9, pour lequel l'atteinte du séchage complet est déterminée, avec les étapes suivantes :

a) Détermination d'une fonction, de préférence d'un polynôme, dans l'image de référence au moyen de la détection du fond, la fonction décrivant l'évolution du contraste le plus élevé dans l'image avec une orientation horizontale,
b) Pour chaque image actuelle, détermination d'une fonction, de préférence d'un polynôme, dans l'image actuelle au moyen de la détection du fond ;
c) Comparaison des deux fonctions au moyen de la distance euclidienne des coefficients du polynôme et détermination de l'image pour laquelle la distance est inférieure à une valeur seuil.

**11.** Procédé selon la revendication 9, pour lequel l'atteinte du séchage complet est déterminée, avec les étapes suivantes :

a) Formation de la différence g(x, y) entre l'image actuelle f(x, y) et l'image de référence h(x, y) ;
b) Élimination du bruit dans g(x, y) par comparaison avec une valeur seuil ;
c) Détermination de l'image pour laquelle la valeur corrigée du bruit ainsi déterminée est inférieure à une valeur seuil.

**12.** Procédé selon l'une des revendications précédentes, pour lequel la présence et/ou la position de bulles (48) est déterminée de manière automatisée pendant le séchage de l'échantillon (32) avec les moyens de traitement d'image.

**13.** Procédé selon la revendication 12, pour lequel la détermination comprend les étapes suivantes :

a) Filtrage de l'image actuelle f(x,y) dans l'espace des fréquences au moyen de la méthode Difference of Gaussian, un résultat de filtrage $g_n(x,y)$ étant obtenu, un résultat total $g(x,y) = \max_n g_n(x, y)$ étant formé ;
b) Présélection des candidats de bulles possibles représentés par des positions (x,y) dans le résultat total g(x, y) en rejetant tout ce qui est inférieur à l'écart-type simple de g(x,y), ce qui donne la matrice zw(x,y) ;
c) Recherche de tous les maxima locaux dans la matrice zw(x, y), chaque maximum représentant un candidat potentiel ;
d) Pour chaque candidat :

i. Calcul de l'augmentation de l'intensité vers ses huit voisins, les quatre voisins nord, est, sud et ouest étant à une distance $d_{NOSW} = d$ du candidat et les quatre voisins nord-est, sud-est, sud-ouest et nord-ouest étant à une distance $d_{NoSoSwNw} = \sqrt{2d^2}$ du candidat ;
ii. Calcul de l'écart-type $\sigma_{NOSW}$ et $\sigma_{NoSoSwNw}$ ou de l'écart absolu maximal par rapport à la moyenne maxDiff$_{NOSW}$ et maxDiff$_{NoSoSwNw}$ sur les augmentations de l'intensité séparément pour le nord-est/sud-ouest et le nord-est/sud-est/sud-ouest/nord-ouest ;
iii. Calcul de la différence entre la valeur zw(x, y) à la position du candidat et la somme $\sigma_{NOSW} + \sigma_{NoSoSwNw}$ ou maxDiff$_{NOSW}$ + maxDiffNososwNw, la différence étant ensuite écrite dans une nouvelle matrice *sol* à la même position (x,y) ;

e) Calcul de l'écart-type $\sigma_g$ du résultat total g(x, y) ;
f) Définition de tous les candidats dans la matrice *sol* supérieurs à N * $\sigma_g$ en tant que bulles, avec N > 1.

**14.** Procédé selon la revendication 12, pour lequel la détermination est effectuée par les étapes suivantes :

a) Filtrage de l'image actuelle f(x,y) dans l'espace des fréquences au moyen de la méthode Difference of Gaussian, un résultat de filtrage $g_n(x,y)$ étant obtenu, un résultat total $g(x,y) = \max_n g_n(x, y)$ étant formé ;
b) Détermination de l'écart-type $\sigma_g$ du résultat total g(x, y) ;
c) Rejet de toutes les valeurs sauf les candidats ayant une valeur dans g(x, y) supérieure à N * $\sigma_g$
d) Pour chaque candidat ayant une valeur supérieure à N * $\sigma_g$

i. Détermination du périmètre U dans l'intersection en N * $\sigma_g$ et l'aire A des candidats ;
ii. Calcul de l'aire $A_{Kreis}$ du cercle correspondant au périmètre ;
iii. Calcul de la différence |A - $A_{Kreis}$| et rejet de tous les candidats pour lesquels la différence est supérieure à la valeur seuil $S_{Akzeptanz}$ ;

e) Pour chaque candidat encore présent :

i. Détermination du périmètre U dans l'intersection en 1 * $\sigma_g$ et l'aire A des candidats ;

ii. Calcul de l'aire $A_{Kreis}$ du cercle correspondant au périmètre U ;

iii. Calcul de la différence $|A - A_{Kreis}|$ et rejet de tous les candidats pour lesquels la différence est supérieure à la valeur seuil $S_{Akzeptanz}$ ;

f) Définition de tous les candidats encore présents en tant que bulles.

15. Procédé selon l'une des revendications précédentes, pour lequel, à l'aide de l'état saisi par les moyens de traitement d'images, des valeurs et des paramètres optimisés sont établis pour le processus d'analyse en vue d'une application ultérieure.

16. Procédé selon l'une des revendications précédentes, pour lequel un masque (56) est généré pour masquer les zones sans intérêt dans les images.

17. Procédé selon l'une des revendications précédentes, pour lequel on détermine quel type de tube en graphite est présent.

10
16
14
12

Fig. 1

28
10
16
18
24
20
22

Fig. 2

10

36
Fig. 3

26

10

**Fig. 4**

26

30    10

74        76

80

78        64

**Fig. 5**

26

10
30
32

**Fig. 6**

26

10

32

**Fig. 7**

26

10

48

32

**Fig. 8**

26

10

34

**Fig. 9**

Fig. 10

Fig. 11

Fig. 12

Fig. 13

Fig. 14

Fig. 15

Fig. 16

Fig. 17

Fig. 18

Fig. 19

Fig. 20

Fig. 21

EP 3 156 782 B1

Fig. 22

Fig. 23

Fig. 24

50

Fig. 25

Fig. 26

Fig. 27

Fig. 28

Fig. 29

38

10

Fig. 30

Fig. 31

66

Fig. 32

58

Fig. 33

38    10

58

Fig. 34

Fig. 35

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3876018 T2
- US 20080088836 A1
- GB 2286243 A


**In der Beschreibung aufgeführte Nicht-Patentliteratur**

- **GLEBOV, ROMAN.** Verfahren zum effzienten Tracking schneller Objekte - implementiert mit CUDA am Beispiel Tischtennis spielender Roboter. Hochschule fur Technik Stuttgart, Dezember 2008
- **GREMSE, FELIX.** Skaleninvariante Merkmalstransformation - SIFT Merkmale. *Rheinisch-Westfälischen Technischen Hochschule Aachen,* Januar 2006, http://ganymed. imib.rwth-aachen.de/lehmann/seminare/bv_2005-08.pdf
- **JACOBS, DAVID W.** Blob Detection. University of Maryland, 27. November 2012
- **JUNG, FRANK.** *Objekterkennung mit SIFT-Features,* September 2006, http://www.multimedia-computing.de/mediawiki/images/e/ea/BA_FrankJung.pdf.
- **KASPERS, ANNE.** Blob Detection. UMC Utrecht, 2011
- **LOWE, DAVID G.** *Distinctive Image Features from Scale-Invariant Keypoints,* Januar 2004, http://www.cs.ubc.ca/~lowe/papers/ijcv04.pdf
- **SHENE, CHING-KUANG.** *Auto Focus,* April 2004, http://www.cs.mtu.edu/~shene/DigiCam/User-Guide/5700/AUTO-FOCUS/Auto-Focus.html.
- Scale-invariant feature transform. Wikimedia Foundation Inc, 28. Januar 2013
- **YOKONO, JERRY J. ; POGGIO, TOMASO.** Rotation Invariant Object Recognition from One Training Example. Massachusetts Institute of Technology, April 2004
- **BOULO ; SORAGHAN ; SADLER ; LITTLEJOHN ; CREEKE.** Use of Image Processing to Aid Furnace Set-up in Electrothermal Atomic Absorption Spectrometry. *JAAS,* vol. 12, 293
- Eine Familie von Bildmerkmalen für die Bewegungsbestimmung in Bildfolgen. **ZIMMERMANN, G. ; KORIES, R.** Mustererkennung. Springer-Verlag GmbH, 1984, vol. 87, 147-153